# EUROPEAN PATENT APPLICATION

(11) **EP 4 753 315 A1**
(43) Date of publication of application: **03.06.2026**
(21) Application number: 23946236.9
(22) Date of filing: 26.07.2023
(51) Int. Cl.: H04W 24/02

(54) **INFORMATION PROCESSING METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN)
(74) Representative: Gunzelmann, Rainer
(86) International application number: PCT/CN2023/109439
(87) International publication number: WO 2025/020149

(57) **Abstract**

Disclosed in the embodiments of the present disclosure are an information processing method and apparatus. First information is determined, wherein the first information is used for determining a correspondence between a first threshold and the number of physical random access channel (PRACH) transmissions, there is one or more first thresholds, and each first threshold corresponds to one number of PRACH transmissions; and the number of PRACH transmissions of a terminal is determined on the basis of a first measurement result and the first information, wherein the first measurement result is obtained by means of performing measurement on a first signal sent by a network device. Therefore, terminals having different power classes or terminals of different types can use appropriate transmission powers when performing multiple PRACH transmissions, and can determine appropriate numbers of PRACH transmissions. Thus, the waste of PRACH resources can be effectively avoided, spectrum resources are saved on, and the communication efficiency of the system is improved.

## Description

### TECHNICAL FIELD

The present disclosure relates to a field of communication technologies, and particularly to a method for processing information, an apparatus for processing information, a communication device, a communication system, and a storage medium.

### BACKGROUND

By performing multiple physical random access channel (PRACH) transmissions in a time domain, PRACH coverage may be enhanced. At the same time, in order to minimize the waste of spectrum resources, one possible way is to perform the multiple PRACH transmissions only in a case that transmit power of a terminal reaches the maximum transmit power. Different terminals may have different power classes, and the transmit power of different types of terminals may also be different.

### SUMMARY

The embodiments of the present disclosure provide a method for processing information, an apparatus for processing information, a communication device, a communication system, and a storage medium.

A first aspect of embodiments of the present disclosure provides a method for processing information, performed by a user equipment (UE). The method includes:
obtaining first information, in which the first information is used to determine a corresponding relationship between first thresholds and numbers of physical random access channel (PRACH) transmissions, in which the number of the first thresholds is one or more, and one of the first thresholds corresponds to one of the numbers of PRACH transmissions;
receiving a first signal sent by a network device, and measuring the first signal to obtain a first measurement result;
determining the number of PRACH transmissions of the UE based on the first measurement result and the first information, in which the first measurement result is obtained by measuring the first signal sent by the network device.

A second aspect of embodiments of the present disclosure provides a method for processing information, performed by a network device. The method includes:
sending first information to a user equipment (UE), in which the first information is used to determine a corresponding relationship between first thresholds and numbers of physical random access channel (PRACH) transmissions, in which the number of the first thresholds is one or more, and one of the first thresholds corresponds to one of the numbers of PRACH transmissions;
in which a first measurement result and the first information are used for the UE to determine the number of PRACH transmissions of the UE, in which the first measurement result is obtained by the UE measuring a first signal sent by the network device.

A third aspect of embodiments of the present disclosure provides a method for processing information. The method includes:
obtaining, by a user equipment (UE), first information, in which the first information is used to determine first thresholds and numbers of physical random access channel (PRACH) transmissions, in which the number of the first thresholds is one or more, and one of the first thresholds corresponds to one of the numbers of PRACH transmissions;
determining, by the UE, the number of PRACH transmissions of the UE based on a first measurement result and the first information, in which the first measurement result is obtained by measuring a first signal sent by a network device.

A fourth aspect of embodiments of the present disclosure provides a user equipment (UE). The UE includes:
a processing module, configured to obtain first information, in which the first information is used to determine a corresponding relationship between first thresholds and numbers of physical random access channel (PRACH) transmissions, in which the number of the first thresholds is one or more, and one of the first thresholds corresponds to one of the numbers of PRACH transmissions;
in which the processing module is further configured to determine the number of PRACH transmissions of the UE based on a first measurement result and the first information, in which the first measurement result is obtained by measuring a first signal sent by a network device.

A fifth aspect of embodiments of the present disclosure provides a network device. The network device includes:
a transceiver module, configured to send first information to a user equipment (UE), in which the first information is used to determine at least one threshold, and each of the at least one threshold corresponds to one number of physical random access channel (PRACH) transmissions;
in which a first measurement result and the first information are used for the UE to determine the number of PRACH transmissions of the UE, in which the first measurement result is obtained by the UE measuring a first signal sent by the network device.

The solution proposed in the embodiments of the present disclosure, by obtaining first information, in which the first information is used to determine a corresponding relationship between first thresholds and numbers of physical random access channel (PRACH) transmissions, in which the number of the first thresholds is one or more, and each of the first thresholds corresponds to one of the numbers of PRACH transmissions; and determining the number of PRACH transmissions of the UE based on a first measurement result and the first information, in which the first measurement result is obtained by measuring a first signal sent by a network device, enables terminals with different power classes or terminals of different types to use appropriate transmit power when performing multiple PRACH transmissions, and determine appropriate numbers of PRACH transmissions, which may effectively avoid waste of PRACH resources, save spectrum resources, and improve the communication efficiency of the system.

### BRIEF DESCRIPTION OF THE DRAWINGS

In order to explain embodiments of the disclosure or technical solutions in the related art more clearly, the drawings described in the embodiments of the disclosure or required in the related art will be briefly introduced below.
FIG. 1 is a diagram illustrating an architecture of a communication system provided in an embodiment of the present disclosure;
FIG. 2A is an interactive schematic diagram of a method for processing information provided in an embodiment of the present disclosure;
FIG. 2B is an interactive schematic diagram of a method for processing information provided in an embodiment of the present disclosure;
FIG. 3A is a flowchart illustrating a method for processing information provided in an embodiment of the present disclosure;
FIG. 3B is a flowchart illustrating a method for processing information provided in an embodiment of the present disclosure;
FIG. 3C is a flowchart illustrating a method for processing information provided in an embodiment of the present disclosure;
FIG. 3D is a flowchart illustrating a method for processing information provided in an embodiment of the present disclosure;
FIG. 4A is a flowchart illustrating a method for processing information provided in an embodiment of the present disclosure;
FIG. 4B is a flowchart illustrating a method for processing information provided in an embodiment of the present disclosure;
FIG. 5 is a flowchart illustrating a method for processing information provided in an embodiment of the present disclosure;
FIG. 6A is a schematic diagram of a configuration of first thresholds provided in an embodiment of the present disclosure;
FIG. 6B is a schematic diagram of a configuration of first thresholds provided in an embodiment of the present disclosure;
FIG. 7A is a block diagram illustrating a user equipment (UE) provided in an embodiment of the present disclosure;
FIG. 7B is a block diagram illustrating a network device provided in an embodiment of the present disclosure;
FIG. 8A is a block diagram illustrating a communication device provided in an embodiment of the present disclosure; and
FIG. 8B is a block diagram of a chip provided in an embodiment of the present disclosure.

### DETAILED DESCRIPTION

The embodiments of the present disclosure provide a method for processing information, an apparatus for processing information, a communication device, a communication system, and a storage medium.

In a first aspect, the embodiments of the present disclosure provide a method for processing information, performed by a user equipment (UE). The method includes:
obtaining first information, in which the first information is used to determine a corresponding relationship between first thresholds and numbers of physical random access channel (PRACH) transmissions, in which the number of the first thresholds is one or more, and one of the first thresholds corresponds to one of the numbers of PRACH transmissions;
determining the number of PRACH transmissions of the UE based on a first measurement result and the first information, in which the first measurement result is obtained by measuring a first signal sent by a network device.

In the above embodiment, the UE may determine at least one first threshold, so that the UE may use appropriate transmit power when performing multiple PRACH transmissions and determine the appropriate number of PRACH transmissions, which may effectively avoid waste of PRACH resources, save spectrum resources, and improve the communication efficiency of the system.

In conjunction with some embodiments of the first aspect, in some embodiments, the method includes one or more of:
a UE power class corresponding to one or more of the first thresholds;
a UE type corresponding to one or more of the first thresholds;
a highest power class among power classes supported by a serving cell of the UE corresponding to one or more of the first thresholds;
a UE type and a power class supported by the UE corresponding to one or more of the first thresholds; or
a UE type and a highest power class supported by the UE corresponding to one or more of the first thresholds.

The above embodiment enables terminals with different power classes or terminals of different types to use appropriate transmit power when performing multiple PRACH transmissions, and determine appropriate numbers of PRACH transmissions, which may effectively avoid waste of PRACH resources, save spectrum resources, and improve the communication efficiency of the system.

In conjunction with some embodiments of the first aspect, in some embodiments, determining the number of PRACH transmissions of the UE based on the first measurement result and the first information includes:
determining the number of PRACH transmissions corresponding to a minimum value in second thresholds as the number of PRACH transmissions of the UE, in which the second thresholds include one or more of the first thresholds that are greater than the first measurement result.

In the above embodiment, an appropriate number of PRACH transmissions may be determined based on the one or more first thresholds, which may effectively avoid waste of PRACH resources, save spectrum resources, and improve the communication efficiency of the system.

In conjunction with some embodiments of the first aspect, in some embodiments, determining the number of PRACH transmissions of the UE based on the first measurement result and at least one first threshold includes:
in a case that the first measurement result is greater than or equal to a maximum value among the at least one first threshold, determining that the number of PRACH transmissions of the UE is one.

In the above embodiment, whether multiple PRACH transmissions are required may be determined based on the one or more first thresholds, which may effectively avoid waste of PRACH resources, save spectrum resources, and improve the communication efficiency of the system.

In conjunction with some embodiments of the first aspect, in some embodiments, obtaining the first information includes:
receiving the first information sent by the network device.

In the above embodiment, the terminal receives the configuration sent by the network device, so that the network may flexibly configure suitable first thresholds for the terminal, so that the terminal may use suitable transmit power when performing multiple PRACH transmissions and determine the appropriate number of PRACH transmissions, which may effectively avoid the waste of PRACH resources, save spectrum resources, and increase the flexibility of configuration.

In conjunction with some embodiments of the first aspect, in some embodiments, the first information includes at least one first threshold; or,
the first information includes a third threshold and at least one offset, in which the third threshold and the at least one offset are used to determine at least one first threshold.

In the above embodiment, the determination of at least one first threshold may be directly configured through the first information, or at least one first threshold may be determined based on the third threshold and at least one offset included in the first information, thereby increasing the diversity and flexibility of the configuration information, allowing flexible selection of parameters in the configuration information, and saving signaling resources.

In conjunction with some embodiments of the first aspect, in some embodiments, each first threshold corresponds to an offset operation count, and the first threshold is equal to a sum of the third threshold and one or more offsets corresponding to one or more offset operations.

In the above embodiment, at least one first threshold may be determined by using different offset operation counts and the offset corresponding to each offset operation, which may effectively save signaling resources.

In conjunction with some embodiments of the first aspect, in some embodiments, the third threshold is one or more of:
a first threshold corresponding to a lowest power class among power classes supported by the UE;
a first threshold corresponding to a highest power class among power classes supported by the UE;
a first threshold corresponding to a first type; or
a first threshold corresponding to a second type;
in which a UE type is the first type or the second type.

In the above embodiment, the second thresholds used to determine at least one first threshold may also be flexibly selected and configured, which increases the diversity and flexibility of the configuration information, allows flexible selection of parameters in the configuration information, and saves signaling resources.

In conjunction with some embodiments of the first aspect, in some embodiments, the first threshold corresponding to the first type includes:
a first threshold corresponding to each number of PRACH transmissions among multiple numbers of PRACH transmissions of the UE of the first type; or,
a first threshold corresponding to one number of PRACH transmissions of the UE of the first type.

In the above embodiment, for the third threshold being the threshold corresponding to the first type, it may also be flexibly selected and configured, which may increase the diversity and flexibility of the configuration information, and flexibly select parameters in the configuration information, thereby saving signaling resources.

In conjunction with some embodiments of the first aspect, in some embodiments, the first threshold corresponding to the second type includes:
a first threshold corresponding to each number of PRACH transmissions among multiple numbers of PRACH transmissions of the UE of the second type; or,
a first threshold corresponding to one number of PRACH transmissions of the UE of the second type.

In the above embodiment, for the third threshold being the threshold corresponding to the second terminal, it may also be flexibly selected and configured, thereby increasing the diversity and flexibility of the configuration information, and allowing the parameters in the configuration information to be flexibly selected, thus saving signaling resources.

In conjunction with some embodiments of the first aspect, in some embodiments, the first measurement result is reference signal receiving power (RSRP).

In the above embodiment, whether to perform multiple PRACH transmissions and the numbers of transmissions may be determined based on the measurement results of the existing reference signals, thereby improving the universality of the method.

In conjunction with some embodiments of the first aspect, in some embodiments, the first signal is a synchronization signal and physical broadcast channel (PBCH) block (SSB).

In the above embodiment, whether to perform multiple PRACH transmissions and the numbers of transmissions may be determined based on the measurement of the existing reference signals, thereby improving the universality of the method.

In a second aspect, the embodiments of the present disclosure provide a method for processing information, performed by a network device. The method includes:
sending first information to a user equipment (UE), in which the first information is used to determine a corresponding relationship between first thresholds and numbers of physical random access channel (PRACH) transmissions, in which the number of the first thresholds is one or more, and one of the first thresholds corresponds to one of the numbers of PRACH transmissions;
in which a first measurement result and the first information are used for the UE to determine the number of PRACH transmissions of the UE, in which the first measurement result is obtained by the UE measuring a first signal sent by the network device.

In the above embodiment, the network device may configure at least one first threshold for the terminal, and the network may flexibly configure a suitable first threshold for the terminal, so that the terminal may use suitable transmit power when performing multiple PRACH transmissions, and determine a suitable number of PRACH transmissions, which may effectively avoid the waste of PRACH resources, save spectrum resources, improve the communication efficiency of the system, and increase the flexibility of configuration.

In conjunction with some embodiments of the second aspect, in some embodiments, the method includes one or more of:
a UE power class corresponding to one or more of the first thresholds;
a UE type corresponding to one or more of the first thresholds;
a highest power class among power classes supported by a serving cell of the UE corresponding to one or more of the first thresholds;
a UE type and a power class supported by the UE corresponding to one or more of the first thresholds; or
a UE type and a highest power class supported by the UE corresponding to one or more of the first thresholds.

In conjunction with some embodiments of the second aspect, in some embodiments, the number of PRACH transmissions of the UE is the number of PRACH transmissions corresponding to a minimum value in second thresholds, in which the second thresholds include one or more of the first thresholds that are greater than the first measurement result.

In conjunction with some embodiments of the second aspect, in some embodiments, in a case that the first measurement result is greater than or equal to a maximum value among at least one first threshold, the number of PRACH transmissions of the UE is one.

In conjunction with some embodiments of the second aspect, in some embodiments, the first information includes at least one first threshold; or,
the first information includes a third threshold and at least one offset, in which the third threshold and the at least one offset are used to determine at least one first threshold.

In conjunction with some embodiments of the second aspect, in some embodiments, each first threshold corresponds to an offset operation count, and the first threshold is equal to a sum of the third threshold and one or more offsets corresponding to one or more offset operations.

In conjunction with some embodiments of the second aspect, in some embodiments, the third threshold is one or more of:
a first threshold corresponding to a lowest power class among power classes supported by the UE;
a first threshold corresponding to a highest power class among power classes supported by the UE;
a first threshold corresponding to a first type; or
a first threshold corresponding to a second type;
in which a UE type of the UE is the first type or the second type.

In conjunction with some embodiments of the second aspect, in some embodiments, the first threshold corresponding to the first type includes:
a threshold corresponding to each number of PRACH transmissions among multiple numbers of PRACH transmissions of the UE of the first type; or,
a threshold corresponding to one number of PRACH transmissions of the UE of the first type.

In conjunction with some embodiments of the second aspect, in some embodiments, the first threshold corresponding to the second type includes:
a threshold corresponding to each number of PRACH transmissions among multiple numbers of PRACH transmissions of the UE of the second type; or,
a threshold corresponding to one number of PRACH transmissions of the UE of the second type.

In conjunction with some embodiments of the second aspect, in some embodiments, the first measurement result is reference signal receiving power (RSRP).

In conjunction with some embodiments of the second aspect, in some embodiments, the first signal is a synchronization signal and physical broadcast channel (PBCH) block (SSB).

In a third aspect, the embodiments of the present disclosure provide a method for processing information. The method includes:
obtaining, by a user equipment (UE), first information, in which the first information is used to determine first thresholds and numbers of physical random access channel (PRACH) transmissions, in which the number of the first thresholds is one or more, and one of the first thresholds corresponds to one of the numbers of PRACH transmissions;
determining, by the UE, the number of PRACH transmissions of the UE based on a first measurement result and the first information, in which the first measurement result is obtained by measuring a first signal sent by a network device.

In the above embodiment, the UE may determine at least one first threshold, so that the UE may use appropriate transmit power when performing multiple PRACH transmissions and determine the appropriate number of PRACH transmissions, which may effectively avoid waste of PRACH resources, save spectrum resources, and improve the communication efficiency of the system.

In conjunction with some embodiments of the third aspect, in some embodiments, the method includes one or more of:
a UE power class corresponding to one or more of the first thresholds;
a UE type corresponding to one or more of the first thresholds;
a highest power class among power classes supported by a serving cell of the UE corresponding to one or more of the first thresholds;
a UE type and a power class supported by the UE corresponding to one or more of the first thresholds; or
a UE type and a highest power class supported by the UE corresponding to one or more of the first thresholds.

In conjunction with some embodiments of the third aspect, in some embodiments, determining by the UE the number of the PRACH transmissions of the UE based on the first measurement result and the first information includes:
determining, by the UE, the number of PRACH transmissions corresponding to a minimum value in second thresholds as the number of PRACH transmissions of the UE, in which the second thresholds include one or more of the first thresholds that are greater than the first measurement result.

In conjunction with some embodiments of the third aspect, in some embodiments, determining by the UE the number of the PRACH transmissions of the UE based on the first measurement result and the first information includes:
in a case that the first measurement result is greater than or equal to a maximum value among at least one first threshold, determining, by the UE, that the number of PRACH transmissions of the UE is one.

In conjunction with some embodiments of the third aspect, in some embodiments, obtaining by the UE the first information includes:
receiving, by the UE, the first information sent by the network device.

In conjunction with some embodiments of the third aspect, in some embodiments, the first information includes at least one first threshold; or,
the first information includes a third threshold and at least one offset, in which the third threshold and the at least one offset are used to determine at least one first threshold.

In conjunction with some embodiments of the third aspect, in some embodiments, each first threshold corresponds to an offset operation count, and the first threshold is equal to a sum of the third threshold and one or more offsets corresponding to one or more offset operations.

In conjunction with some embodiments of the third aspect, in some embodiments, the first information includes at least one first threshold; or,
the first information includes a third threshold and at least one offset, in which the third threshold and the at least one offset are used to determine at least one first threshold.

In conjunction with some embodiments of the third aspect, in some embodiments, the third threshold is one or more of:
a first threshold corresponding to a lowest power class among power classes supported by the UE;
a first threshold corresponding to a highest power class among power classes supported by the UE;
a first threshold corresponding to a first type; or
a first threshold corresponding to a second type;
in which a UE type of the UE is the first type or the second type.

In conjunction with some embodiments of the third aspect, in some embodiments, the first threshold corresponding to the first type includes:
a first threshold corresponding to each number of PRACH transmissions among multiple numbers of PRACH transmissions of the UE of the first type; or,
a first threshold corresponding to one number of PRACH transmissions of the UE of the first type.

In conjunction with some embodiments of the third aspect, in some embodiments, the first threshold corresponding to the second type includes:
a first threshold corresponding to each number of PRACH transmissions among multiple numbers of PRACH transmissions of the UE of the second type; or,
a first threshold corresponding to one number of PRACH transmissions of the UE of the second type.

In conjunction with some embodiments of the third aspect, in some embodiments, the first measurement result is reference signal receiving power (RSRP).

In conjunction with some embodiments of the third aspect, the first signal is a synchronization signal and physical broadcast channel (PBCH) block (SSB).

In a fourth aspect, an embodiment of the present disclosure proposes a user equipment (UE), which includes at least one of a transceiver module or a processing module; in which the UE is used to execute the first aspect and the optional implementation of the first aspect.

In a fifth aspect, an embodiment of the present disclosure proposes a network device, which includes at least one of a transceiver module or a processing module; in which the network device is used to execute the second aspect and the optional implementation of the second aspect.

In a sixth aspect, an embodiment of the present disclosure proposes a user equipment (UE), including: one or more processors; in which the UE is used to perform the first aspect and the optional implementation of the first aspect.

In a seventh aspect, an embodiment of the present disclosure proposes a network device, including: one or more processors; in which the network device is used to perform the second aspect and the optional implementation of the second aspect.

In an eighth aspect, an embodiment of the present disclosure proposes a communication system, including: a user equipment (UE) and a network device; in which the UE is configured to perform the method described in the first aspect and the optional implementation of the first aspect, and the network device is configured to perform the method described in the second aspect and the optional implementation of the second aspect.

In a ninth aspect, an embodiment of the present disclosure proposes a storage medium, which stores instructions. When the instructions are performed in a communication device, the communication device performs the method described in the first aspect and the optional implementation of the first aspect, the second aspect and the optional implementation of the second aspect.

In a tenth aspect, an embodiment of the present disclosure proposes a program product. When the program product is performed by a communication device, the communication device performs the method described in the first aspect and the optional implementation of the first aspect, the second aspect and the optional implementation of the second aspect.

In an eleventh aspect, an embodiment of the present disclosure proposes a computer program, which, when executed on a computer, enables the computer to perform the method described in the first aspect and the optional implementation of the first aspect, the second aspect and the optional implementation of the second aspect.

In a twelfth aspect, an embodiment of the present disclosure provides a chip or a chip system. The chip or chip system includes a processing circuit configured to perform the method described in accordance with the first aspect and the optional implementation of the first aspect, the second aspect and the optional implementation of the second aspect.

It is understandable that the above-mentioned UEs, network devices, communication systems, storage media, program products, computer programs, chips or chip systems are all used to execute the methods proposed in the embodiments of the present disclosure. Therefore, for the beneficial effects that may be achieved, reference may be made to the beneficial effects in the corresponding methods, which will not be repeated here.

The embodiments of the present disclosure provide a method for processing information, an apparatus for processing information, a communication device, a communication system, and a storage medium. In some embodiments, the terms an information processing method, a method for processing information, and a communication method, etc. may be replaced with each other, the terms an information processing apparatus, an apparatus for processing information, a communication apparatus, etc. may be replaced with each other, and the terms a system for processing information, a communication system, etc. may be replaced with each other.

The embodiments of the present disclosure are not exhaustive, but are only illustrative of some embodiments, and are not intended to be a specific limitation on the protection scope of the present disclosure. In the absence of contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, the optional implementation methods in a certain embodiment may be arbitrarily combined. In addition, the embodiments may be arbitrarily combined. For example, some or all of the steps of different embodiments may be arbitrarily combined, and a certain embodiment may be arbitrarily combined with the optional implementation methods of other embodiments.

In each embodiment of the present disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiment of the present disclosure are merely for the purpose of describing a particular embodiment and are not intended to limit the embodiment of the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, in a case that using articles such as "a", "an", "the" in English translation, the noun after the article may be understood as a singular expression or a plural expression.

In the embodiments of the present disclosure, "a plurality of" refers to two or more.

In some embodiments, the terms "at least one", "one or more", "a plurality of", "multiple", etc. may be used interchangeably.

In some embodiments, "at least one of A and B", "A and/or B", "A in one case, B in another case", "in response to one case, A; in response to another case, B", etc., may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are more branches such as A, B, C, etc., the above is also applicable.

In some embodiments, the reciting way of "A or B" may include the following technical solutions according to the situation: in some embodiments, A (A is executed independently of B); in some embodiments, B (B is executed independently of A); in some embodiments, execution is selected from A and B (A and B are selectively executed). When there are more branches such as A, B, C, etc., the above is also applicable.

The prefixes such as "first" and "second" in the embodiments of the present disclosure are only used to distinguish different description objects, and do not constitute restrictions on the position, order, priority, quantity or content of the description objects. The statements of the description objects refer to the description in the claims or the context of embodiments, and should not constitute unnecessary restrictions due to the use of prefixes. For example, if the description object is a "field", the ordinal numbers before the "field" of the "first field" and the "second field" do not limit the position or order between the "fields", and the "first" and "second" do not limit whether the "fields" they modify are in the same message, nor do they limit the order of the "first field" and the "second field". For another example, if the description object is a "level", the ordinal numbers before the "level" in the "first level" and the "second level" do not limit the priority between the "levels". For another example, the number of description objects is not limited by the ordinal number, and may be one or more. Taking the "first apparatus" as an example, the number of "apparatuses" may be one or more. In addition, the objects modified by different prefixes may be the same or different. For example, if the description object is " apparatus", then the "first apparatus" and the "second apparatus" may be the same apparatus or different apparatuses, and their types may be the same or different. For another example, if the description object is "information", then the "first information" and the "second information" may be the same information or different information, and their contents may be the same or different.

In some embodiments, "including A", "comprising A", "containing A", "used to indicate A in", and "carrying A with" may be interpreted as directly carrying A or indirectly indicating A.

In some embodiments, terms such as "in response to ...", "in response to determining ...", "in a case of ...", "at the time of ...", "when ...", "if ..." etc. may be used interchangeably.

In some embodiments, terms such as "greater than", "greater than or equal to", "not less than", "more than", "more than or equal to", "not less than", "higher than", "higher than or equal to", "not lower than", and "above" may be replaced with each other, and terms such as "less than", "less than or equal to", "not greater than", "less than", "less than or equal to", "no more than", "lower than", "lower than or equal to", "not higher than", and "below" may be replaced with each other.

In some embodiments, apparatuses and devices, etc. may be interpreted as physical or virtual, and their names are not limited to the names recorded in the embodiments. In some cases, they may also be understood as "equipment", "device", "circuit", "network element", "node", "function", "unit", "section", "system", "network", "chip", "chip system", "entity", and "subject" etc.

In some embodiments, "network" may be interpreted as an apparatus included in the network, such as an access network device, a core network device, etc.

In some embodiments, the "access network device (AN device)" may also be referred to as "radio access network device (RAN device)", "base station (BS)", "radio base station", "fixed station", "node", "access point", "transmission point (TP)", "reception point (RP)", "transmission reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like.

In some embodiments, the terms "terminal" or "terminal device" may be referred to as "user equipment (UE)", "user terminal" "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, acquisition of data and information, etc. may comply with the laws and regulations of the country where the data is obtained.

In some embodiments, data and information, etc. may be obtained with the consent of a user.

In addition, each element, each row, or each column in a table of the embodiments of the present disclosure may be implemented as an independent embodiment, and the combination of any elements, any rows, and any columns may also be implemented as an independent embodiment.

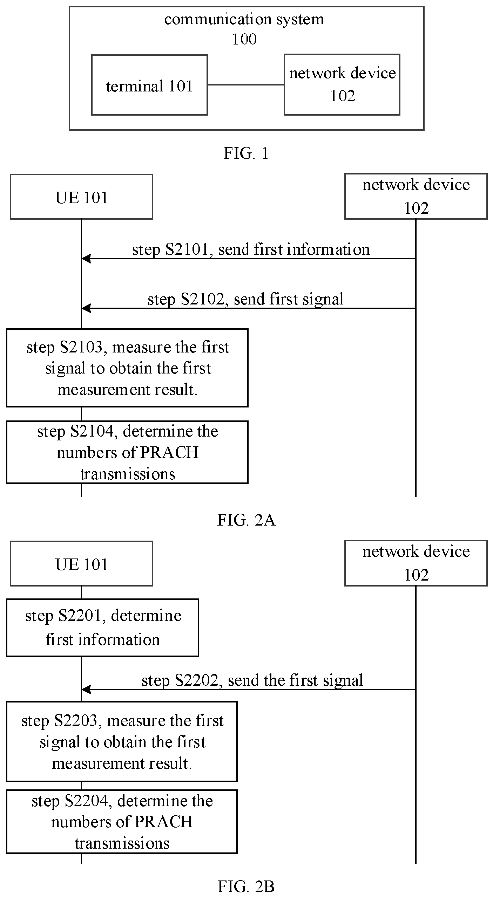

FIG. 1 is a diagram illustrating an architecture of a communication system according to an embodiment of the present disclosure.

As shown in FIG. 1, a communication system 100 includes a terminal 101 and a network device 102.

In some embodiments, the terminal 101 includes at least one of, for example, a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart city, and a wireless terminal device in a smart home, but the present disclosure is not limited thereto.

In some embodiments, the network device 102 is at least one of, for example, a node or device that accesses the terminal to the wireless network. The network device may include an evolved NodeB (eNB) in a 5G communication system, a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wi-Fi system, but the present disclosure is not limited thereto.

In some embodiments, the technical solution of the present disclosure may be applicable to the Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the network device may be composed of a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU, which is centrally controlled by the CU, but the present disclosure is not limited to this.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

The following embodiments of the present disclosure may be applied to the communication system 100 or some entities shown in FIG. 1, but are not limited thereto. The entities shown in FIG. 1 are examples. The communication system may include all or part of the entities in FIG. 1, or may include other entities not shown in FIG. 1. The number and form of the entities are arbitrary. The connection relationship between the entities is an example. The entities may be connected or disconnected, and the connection may be in any manner, which may be a direct connection or an indirect connection, and may be a wired connection or a wireless connection.

The embodiments of the present disclosure may be applied to long term evolution (LTE), LTE-Advanced (LTE-A), LTE-Beyond (LTE-B), SUPER 3G, IMT-Advanced, a 4th generation mobile communication system (4G), a 5th generation mobile communication system (5G), 5G new radio (NR), future radio access (FRA), a new radio access technology (RAT), new radio (NR), new radio access (NX), future generation radio access (FX), a global system for mobile communication (GSM (that is, a registered trademark)), CDMA2000, an ultra mobile broadband (UMB), IEEE 802.11 (i.e., Wi-Fi (that is, a registered trademark)), IEEE 802.16 (i.e., WiMAX (that is, a registered trademark)), IEEE 802.20, an Ultra-WideBand (UWB), a Bluetooth (that is, a registered trademark), a public land mobile network (PLMN), a device-to-device (D2D) system, a machine-to-machine (M2M) system, an internet of things (IoT) system, vehicle-to-everything (V2X), systems using other communication methods, a next generation system based on them, etc. In addition, multiple systems may also be combined (for example, a combination of the LTE or the LTE-A, and the 5G, etc.) for application.

The terminal may send the physical random access channel (PRACH) multiple times in a time domain, which is also known as multiple PRACH transmissions, to achieve PRACH coverage enhancement.

As an example, for multiple PRACH transmissions, the network device may select one or more from a plurality of numbers of transmissions, such as {2, 4, 8}, as numbers of PRACH transmissions to be configured for the terminal.

In some embodiments, for multiple PRACH transmissions, a random access channel (RACH) occasion (RO) group (RO group) may be introduced. An RO group corresponds to one number of transmissions configured by the network device. After the terminal determines the specific number of transmissions, it selects a RO group corresponding to the number of transmissions for multiple PRACH transmissions.

Optionally, for multiple PRACH transmissions with the same transmit (Tx) beam, the RO group is used for multiple PRACH transmissions with separate preambles on a shared RO; and/or, the RO group is used for multiple PRACH transmissions on separate ROs, in which one RO group includes at least one valid RO for a specific number of multiple PRACH transmissions.

Optionally, all ROs in the RO group are associated with the same synchronization signal and physical broadcast channel (PBCH) block (SSB) index.

Optionally, a shared RO/preamble means that the RO/preamble is a RO/preamble shared with a single PRACH transmission.

A separate RO/preamble means that the RO/preamble is different from the RO/preamble used for a single PRACH transmission.

Optionally, multiple PRACH transmissions in one random access channel (RACH) attempt are performed within one RO group.

Optionally, the number of valid ROs in the RO group is equal to one of multiple configured numbers of PRACH transmissions (e.g., {2, 4, 8}).

Optionally, in a case that only one value is configured for the number of PRACH transmissions, the number of valid ROs in the RO group is equal to this value.

Optionally, in a case that multiple numerical values are configured for the number of PRACH transmissions, for each numerical value, the number of valid ROs in the RO group corresponding to each numerical value is equal to the corresponding numerical value.

In some embodiments, the terminal may determine the number of PRACH transmissions by a first threshold of reference signal receiving power (RSRP) of the SSB.

In some embodiments, in order to avoid waste of spectrum resources as much as possible, PRACH may be sent multiple times only when the transmit power of the terminal reaches the maximum transmit power, which also allows the network device to avoid performing more complex multi-PARCH detection.

Different terminals may have different power classes (PC), and transmit power of terminals of different power classes may also be different. For example, in an initial access phase, there may be terminals that support high power (HP) and terminal that support low power (LP), and terminals of different power classes may be increased to their respective maximum supported power classes through power ramping for PRACH transmission. Therefore, a reasonable first RSRP threshold is determined to meet the requirement that each terminal reaches the maximum power class when performing multiple PRACH transmissions.

In an FR1 (frequency) band, in a case that a reduced capability (RedCap) terminal shares the RO with a new radio (NR) normal terminal, or an evolved reduced capability (eRedCap) terminal shares the RO with the NR normal terminal, different types of terminals have different RSRP measurement values, which will also lead to different PRACH transmission behaviors for terminals using the same first RSRP threshold at the same coverage distance. Therefore, it is also necessary to consider the design of reasonable first RSRP thresholds.

The method and apparatus for processing information provided by the present disclosure are described in detail below with reference to the accompanying drawings.

FIG. 2A is an interactive schematic diagram of a method for processing information according to an embodiment of the present disclosure. As shown in FIG. 2A, the embodiment of the present disclosure relates to a method for processing information, and the method includes the followings.

Step S2101, a network device 102 sends first information to a user equipment (UE) 101.

In some embodiments, the UE 101 receives the first information sent by the network device 102.

In some embodiments, the first information is used to determine a corresponding relationship between first thresholds and numbers of physical random access channel (PRACH) transmissions of the UE 101.

In some embodiments, the first information is used to determine at least one first threshold.

In some embodiments, each first threshold of at least one first threshold determined by the first information corresponds to one number of PRACH transmissions.

In some embodiments, the name of the first information is not limited, and it may be, for example, "random access configuration", "multiple-PRACH transmission configuration", etc.

In some embodiments, the first information may directly include the at least one first threshold.

In some embodiments, the first information includes the at least one first threshold and the number of PRACH transmissions corresponding to each first threshold.

In some embodiments, the first threshold may be used to implicitly indicate the number of PRACH transmissions corresponding to the threshold (for example, implicitly indicated by the name of the first threshold, etc.), etc. This embodiment is not limited here.

In some embodiments, the first information includes a third threshold and at least one offset, in which the third threshold and the at least one offset are used to determine at least one first threshold.

Optionally, each first threshold corresponds to an offset operation count, and the first threshold is equal to a sum of the third threshold and one or more offsets corresponding to one or more offset operations.

In some embodiments, the third threshold is one or more of:
a threshold corresponding to a lowest power class among power classes supported by the UE;
a threshold corresponding to a highest power class among power classes supported by the UE;
a threshold corresponding to a first type; or
a threshold corresponding to a second type;
in which a UE type of the UE 101 is the first type or the second type.

Optionally, the UE of the first type may be a normal UE, and the UE of the second type may be at least one of a RedCap UE or an eRedCap UE.

Optionally, the threshold corresponding to the first type includes:
a threshold corresponding to each number of PRACH transmissions among multiple numbers of PRACH transmissions of the UE of the first type; or,
a threshold corresponding to one number of PRACH transmissions of the UE of the first type.

Optionally, the threshold corresponding to the UE of the second type includes:
a threshold corresponding to each number of PRACH transmissions among multiple numbers of PRACH transmissions of the UE of the second type; or,
a threshold corresponding to one number of PRACH transmissions of the UE of the second type.

In some embodiments, the third threshold may be configured by the network device or may be specified by a protocol.

In some embodiments, the above offset may be configured by the network device or may be specified by a protocol.

In the above embodiment, the third threshold may be included in the first thresholds or may not be included in the first thresholds, which is not limited in the embodiment.

In some embodiments, the first information may be for a certain type of UE or not for a certain type of UE. For example, the first information may be for the UE of the first type, and the second UE will not obtain the first information for the first UE. For another example, the second UE may be able to obtain the first information for the first UE, and may determine at least one first threshold corresponding to the second UE based on the first information of the first UE; or the second UE may be able to obtain the first information for the first UE, but the second UE will not use the first information. It may also be that the second UE is able to obtain the first information, and the first information is not for a certain type of UE.

In order to more clearly understand the above solution, the following examples are proposed as possible implementations for reference, but the present disclosure is not limited thereto.

As an example, it is assumed that the power classes of the UE include power class 1 (PC#1), power class 2 (PC#2), and power class 3 (PC#3), in which the maximum transmit power corresponding to the power class 3 (PC#3) is the lowest, and the maximum transmit power corresponding to the power class 1 (PC#1) is the highest. The first information includes a third threshold and at least one offset, in which the third threshold is a first threshold corresponding to a lowest power class among power classes supported by the UE 101, that is, the third threshold is the first threshold corresponding to the PC#3. The at least one offset may be an offset of a first threshold corresponding to the PC#2 relative to the first threshold corresponding to the PC#3, and an offset of a first threshold corresponding to the PC#1 relative to the first threshold corresponding to the PC#3; or, the at least one offset may also be an offset of the first threshold corresponding to the PC#2 relative to the first threshold corresponding to the PC#3, and an offset of the first threshold corresponding to the PC#1 relative to the first threshold corresponding to the PC#2; or, the at least one offset may also be an offset of the first threshold corresponding to the PC#2 relative to the first threshold corresponding to the PC#1, and an offset of the first threshold corresponding to the PC#1 relative to the first threshold corresponding to the PC#3, and so on. Optionally, the value of the offset may be positive or negative.

Similarly, as an example, it is assumed that the power classes of the UE include power class 1 (PC#1), power class 2 (PC#2), and power class 3 (PC#3), in which the maximum transmit power corresponding to the power class 3 (PC#3) is the lowest, and the maximum transmit power corresponding to the power class 1 (PC#1) is the highest. The first information includes a third threshold and at least one offset, in which the third threshold is a first threshold corresponding to a highest power class among power classes supported by the UE 101, that is, the third threshold is the first threshold corresponding to the PC#1. The at least one offset may be an offset of a first threshold corresponding to the PC#2 relative to the first threshold corresponding to the PC#1, and an offset of a first threshold corresponding to the PC#3 relative to the first threshold corresponding to the PC#1; or, the at least one offset may also be an offset of the first threshold corresponding to the PC#2 relative to the first threshold corresponding to the PC#1, and an offset of the first threshold corresponding to the PC#3 relative to the first threshold corresponding to the PC#2; or, the at least one offset may also be an offset of the first threshold corresponding to the PC#2 relative to the first threshold corresponding to the PC#3, and an offset of the first threshold corresponding to the PC#3 relative to the first threshold corresponding to the PC#1, and so on. Optionally, the value of the offset may be positive or negative.

As an example, the third threshold in the first information is a first threshold corresponding to each number of PRACH transmissions among multiple numbers of PRACH transmissions of the normal UE. For example, the network device configures the numbers of multiple PRACH transmissions of the normal UE as {m1, m2, m3}, and the third threshold includes first threshold th1 corresponding to m1 PRACH transmissions of the normal UE, first threshold th2 corresponding to m2 PRACH transmissions of the normal UE, and first threshold th3 corresponding to m3 PRACH transmissions of the normal UE. The at least one offset may include an offset of a first threshold corresponding to n1 PRACH transmissions of the RedCap UE relative to th1, an offset of a first threshold corresponding to n2 PRACH transmissions of the RedCap UE relative to th2, and an offset of a first threshold corresponding to n3 PRACH transmissions of the RedCap UE relative to th3; or, the at least one offset may also include an offset of the first threshold corresponding to n1 PRACH transmissions of the RedCap UE relative to th1, an offset of the first threshold corresponding to n2 PRACH transmissions of the RedCap UE relative to th1, and an offset of the first threshold corresponding to n3 PRACH transmissions of the RedCap UE relative to th1, and the like, which is not limited in the embodiment.

As an example, the third threshold in the first information is a first threshold corresponding to one of numbers of PRACH transmissions of the normal UE. For example, the network device configures the numbers of multiple PRACH transmissions of the normal UE as {m1, m2, m3}, and the third threshold includes first threshold th1 corresponding to m1 PRACH transmissions of the normal UE. The at least one offset may include an offset delta_1 of first threshold th2 corresponding to m2 PRACH transmissions of the normal UE relative to th1, and an offset delta_2 of first threshold th3 corresponding to m3 PRACH transmissions of the normal UE relative to th1; or, the at least one offset may include an offset delta_1 of first threshold th2 corresponding to m2 PRACH transmissions of the normal UE relative to th1, and an offset delta_3 of first threshold th3 corresponding to m3 PRACH transmissions of the normal UE relative to th2=th1+delta_1, and so on. Optionally, the values of delta_1 and delta_3 may be the same or different. In addition, the at least one offset may include an offset of the first threshold corresponding to n1 PRACH transmissions of the RedCap UE relative to th1, an offset of the first threshold corresponding to n2 PRACH transmissions of the RedCap UE relative to th1 or th2, and an offset of the first threshold corresponding to n3 PRACH transmissions of the RedCap UE relative to th1 or th3, and so on.

Similarly, as an example, the third threshold in the first information is a first threshold corresponding to each number of PRACH transmissions among multiple numbers of PRACH transmissions of the RedCap UE. For example, the network device configures the numbers of multiple PRACH transmissions of the RedCap UE as {m1, m2, m3}, and the third threshold includes first threshold th1 corresponding to m1 PRACH transmissions of the RedCap UE, first threshold th2 corresponding to m2 PRACH transmissions of the RedCap UE, and first threshold th3 corresponding to m3 PRACH transmissions of the RedCap UE. The at least one offset may include an offset of a first threshold corresponding to n1 PRACH transmissions of the normal UE relative to th1, an offset of a first threshold corresponding to n2 PRACH transmissions of the normal UE relative to th2, and an offset of a first threshold corresponding to n3 PRACH transmissions of the normal UE relative to th3; or, the at least one offset may also include an offset of the first threshold corresponding to n1 PRACH transmissions of the normal UE relative to th1, an offset of the first threshold corresponding to n2 PRACH transmissions of the normal UE relative to th1, and an offset of the first threshold corresponding to n3 PRACH transmissions of the normal UE relative to th1, and the like, which is not limited in the embodiment.

As an example, the third threshold in the first information is a first threshold corresponding to one of numbers of PRACH transmissions of the RedCap UE. For example, the network device configures the numbers of multiple PRACH transmissions of the RedCap UE as {m1, m2, m3}, and the third threshold includes first threshold th1 corresponding to m1 PRACH transmissions of the RedCap UE. The at least one offset may include an offset delta_1 of first threshold th2 corresponding to m2 PRACH transmissions of the RedCap UE relative to th1, and an offset delta_2 of first threshold th3 corresponding to m3 PRACH transmissions of the RedCap UE relative to th1; or, the at least one offset may include an offset delta_1 of first threshold th2 corresponding to m2 PRACH transmissions of the RedCap UE relative to th1, and an offset delta_3 of first threshold th3 corresponding to m3 PRACH transmissions of the RedCap UE relative to th2=th1+delta_1, and so on. Optionally, the values of delta_1 and delta_3 may be the same or different. In addition, the at least one offset may include an offset of a first threshold corresponding to n1 PRACH transmissions of the normal UE relative to th1, an offset of a first threshold corresponding to n2 PRACH transmissions of the normal UE relative to th1 or th2, and an offset of a first threshold corresponding to n3 PRACH transmissions of the normal UE relative to th1 or th3, and so on.

Step S2102, the network device 102 sends a first signal to the UE 101.

In some embodiments, the UE 101 receives the first signal sent by the network device 102.

In some embodiments, the first signal is used by the UE 101 to perform a measurement to obtain a measurement result.

In some embodiments, the first signal is used by the UE 101 to perform a measurement to determine whether multiple PRACH transmissions are required.

In some embodiments, the first signal may be a synchronization signal and physical broadcast channel (PBCH) block (SSB), or may be other signals such as a channel state information reference signal (CSI-RS) and the like.

Step S2103: the UE 101 measures the first signal to obtain a first measurement result.

In some embodiments, the UE 101 may measure a received first signal to obtain a first measurement result.

In some embodiments, the first measurement result may be a reference signal received power (RSRP), or may be other measurement results such as a reference signal received quality (RSRQ) and the like.

In some embodiments, the first measurement result may be used by the UE 101 to determine whether multiple PRACH transmissions are required and the number of the PRACH transmissions required.

Step S2104, the UE 101 determines the number of PRACH transmissions.

In some embodiments, the UE 101 determines the number of PRACH transmissions based on the first measurement result and the first information.

In some embodiments, the UE 101 compares the first measurement result with at least one first threshold determined by the first information to determine the number of PRACH transmissions.

In some embodiments, the UE 101 determines that the number of PRACH transmissions corresponding to the minimum value in second thresholds is the number of PRACH transmissions of the UE 101, and the second thresholds include one or more of the first thresholds that are greater than the first measurement result.

In some embodiments, in a case that the first measurement result is greater than or equal to the maximum value among the at least one first threshold, the number of PRACH transmissions of the UE 101 is determined to be one.

In some embodiments, the UE 101 determines the number of PRACH transmissions of the UE 101 based on the first measurement result and a first threshold corresponding to the current power class of the UE 101; in which each of the at least one first threshold determined by the first information corresponds to a power class of the UE.

Optionally, as an example, it is assumed that the power classes of the UE include power class 1 (PC#1), power class 2 (PC#2), and power class 3 (PC#3), in which the maximum transmit power corresponding to the power class 3 (PC#3) is the lowest, and the maximum transmit power corresponding to the power class 1 (PC#1) is the highest. Each of the at least one first threshold determined by the UE based on the first information corresponds to a power class of the UE, that is, the UE may determine, based on the first information, first threshold th1 corresponding to PC#1, first threshold th2 corresponding to PC#2, and first threshold th3 corresponding to PC#3. Assuming that the maximum power class currently supported by the UE is PC#2, the UE may determine whether to perform multiple PRACH transmissions and/or determine the number of PRACH transmissions based on the comparison result of the first measurement result and the first threshold th2. The first threshold th2 may include one or more first thresholds, and different first thresholds correspond to different numbers of PRACH transmissions.

In some implementations, each power class may correspond to the at least one first threshold, and different first thresholds may correspond to different numbers of PRACH transmissions.

Optionally, as an example, the UE may determine, based on the first information, first thresholds th1 and th1' corresponding to PC#1, first thresholds th2 and th2' corresponding to PC#2, and first thresholds th3 and th3' corresponding to PC#3. The number of transmissions corresponding to th1 is m1, the number of transmissions corresponding to th1' is m2, the number of transmissions corresponding to th2 is m1, the number of transmissions corresponding to th2' is m2, the number of transmissions corresponding to th3 is m1, and the number of transmissions corresponding to th3' is m2. Assuming that the highest power class currently supported by the UE is PC#2, the UE may determine the number of PRACH transmissions based on the comparison result of the first measurement result and the first thresholds th2 and th2'.

For example, optionally, the first measurement result is greater than or equal to th2, multiple PRACH transmissions are not performed, and the number of PRACH transmissions is determined to be 1.

Optionally, in a case that the first measurement result is less than th2 and greater than or equal to th2', the number of PRACH transmissions is determined to be m1.

Optionally, in a case that the first measurement result is less than th2', the number of PRACH transmissions is determined to be m2.

Optionally, in some embodiments, the corresponding and appropriate numbers of PRACH transmissions may be configured for different first thresholds.

In some embodiments, the UE 101 determines the number of PRACH transmissions of the UE 101 based on the first measurement result and a first threshold corresponding to a UE type of the UE 101; in which each of the at least one first threshold determined by the first information corresponds to a UE type.

Optionally, as an example, each of the at least one first threshold determined by the UE based on the first information corresponds to a UE type, that is, the UE may determine, based on the first information, first thresholds th1 and th2 corresponding to the normal UE, and first thresholds th3 and th4 corresponding to the RedCap UE. The number of transmissions corresponding to th1 is m1, the number of transmissions corresponding to th2 is m2, the number of transmissions corresponding to th3 is n1, and the number of transmissions corresponding to th4 is n2. Assuming that the UE 101 is the RedCap UE, the UE may determine the number of PRACH transmissions based on the comparison result of the first measurement result and the first thresholds th3 and th4.

For example, optionally, the first measurement result is greater than or equal to th3, multiple PRACH transmissions are not performed, and the number of PRACH transmissions is determined to be 1.

Optionally, in a case that the first measurement result is less than th3 and greater than or equal to th4, the number of PRACH transmissions is determined to be n1.

Optionally, in a case that the first measurement result is less than th4, the number of PRACH transmissions is determined to be n2.

In some embodiments, the UE 101 determines the number of PRACH transmissions of the UE 101 based on the first measurement result and a first threshold corresponding to the highest power class among power classes supported by a serving cell where the UE 101 is located; in which each of the at least one first threshold determined by the first information corresponds to a power class supported by the serving cell.

In some embodiments, the names of information, etc. are not limited to the names recited in the embodiments, and terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, the names of information, etc. are not limited to the names recited in the embodiments, and terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, terms such as "physical downlink shared channel (PDSCH)", "DL data" and the like may be interchangeable, and terms such as "physical uplink shared channel (PUSCH)", "UL data" and the like may be interchangeable.

In some embodiments, the terms "radio", "wireless", "radio access network (RAN)", "access network (AN)", "RAN-based" and the like may be used interchangeably.

In some embodiments, terms such as "resource block (RB)", "physical resource block (PRB)", "sub-carrier group (SCG)", "resource element group (REG)", "PRB pair", "RB pair", "resource element (RE)" and "sub-carrier" may be used interchangeably.

In some embodiments, "obtain", "get", "receive", "transmit", "bidirectional transmission", "send and/or receive" may be interchangeable, and may be interpreted as receiving from other entity, obtaining from a protocol, obtaining from high levels, obtaining by self-processing, autonomous implementation, etc.

In some embodiments, terms such as "send", "launch", "report", "issue", "transmit", "bidirectional transmission", "send and/or receive" may be used interchangeably.

In some embodiments, terms such as "certain", "preseted", "preset", "set", "indicated", "some", "any", and "first" may be interchangeable, and "specific A", "preseted A", "preset A", "set A", "indicated A", "some A", "any A", and "first A" may be interpreted as A pre-defined in a protocol, etc., or as A obtained through setting, configuration, or indication, etc., and may also be interpreted as specific A, some A, any A, or first A, etc., but is not limited to this.

In some embodiments, the determination or judgment may be performed by a value represented by 1 bit (0 or 1), by a true or false value (i.e., boolean value) represented by true or false, or by comparison of a numerical value (for example, comparison with a predetermined value), but the present disclosure is not limited to this.

The communication method involved in the embodiments of the present disclosure may include at least one of steps S2101 to S2104. For example, step 2101 may be implemented as an independent embodiment, step 2104 may be implemented as an independent embodiment, steps 2102+2103 may be implemented as an independent embodiment, steps 2101+2104 may be implemented as an independent embodiment, steps 2101+2102+2103 may be implemented as an independent embodiment, steps 2102+2103+2104 may be implemented as an independent embodiment, steps 2101+2102+2103+2104 may be implemented as an independent embodiment, and so on, but the present disclosure is not limited thereto.

In some embodiments, step 2102 is optional, and one or more of these steps may be omitted or replaced in different embodiments.

In some embodiments, step 2103 is optional, and one or more of these steps may be omitted or replaced in different embodiments.

In some embodiments, reference may be made to other optional implementations described before or after the specification corresponding to FIG. 2A.

FIG. 2B is an interactive schematic diagram of a method for processing information according to an embodiment of the present disclosure. As shown in FIG. 2B, the embodiment of the present disclosure relates to a method for processing information, and the method includes the followings.

Step S2201, a user equipment (UE) 101 determines first information.

In some embodiments, the UE 101 determines the first information based on its type (such as a normal UE or a (e)RedCap UE) and at least one power class supported by the UE.

In some embodiments, the UE 101 determines the first information based on its own type and the highest power class among at least one power class supported by the UE 101.

In some embodiments, the first information is used to determine a corresponding relationship between first thresholds and numbers of physical random access channel (PRACH) transmissions of the UE 101.

In some embodiments, the first information is used to determine at least one first threshold.

In some embodiments, each first threshold of at least one first threshold determined by the first information corresponds to one of numbers of PRACH transmissions.

In some embodiments, the name of the first information is not limited, and it may be, for example, "random access configuration", "multiple-PRACH transmission configuration", etc.

In some embodiments, the first information may directly include the at least one first threshold.

In some embodiments, the first information includes the at least one first threshold and the number of PRACH transmissions corresponding to each first threshold.

In some embodiments, the first threshold may be used to implicitly indicate the number of PRACH transmissions corresponding to the threshold (for example, implicitly indicated by the name of the first threshold, etc.), etc. This embodiment is not limited here.

In some embodiments, the first information includes a third threshold and at least one offset, in which the third threshold and the at least one offset are used to determine at least one first threshold.

In some embodiments, the third threshold is one or more of:
a first threshold corresponding to a lowest power class among power classes supported by the UE;
a first threshold corresponding to a highest power class among power classes supported by the UE;
a first threshold corresponding to a first type; or
a first threshold corresponding to a second type;
in which a UE type of the UE 101 is the first type or the second type.

Optionally, the first type of the UE may be a normal UE, and the second type of the UE may be at least one of a RedCap UE or an eRedCap UE.

Optionally, the first threshold corresponding to the first type includes:
a first threshold corresponding to each number of PRACH transmissions among multiple numbers of PRACH transmissions of the UE of the first type; or,
a first threshold corresponding to one number of PRACH transmissions of the UE of the first type.

Optionally, the first threshold corresponding to the second UE type includes:
a first threshold corresponding to each number of PRACH transmissions among multiple numbers of PRACH transmissions of the UE of the second type; or,
a first threshold corresponding to one number of PRACH transmissions of the UE of the second type.

In some embodiments, the third threshold may be configured by the network device or may be specified by a protocol.

In some embodiments, the above offset may be configured by the network device or may be specified by a protocol.

In some embodiments, the reduced capability UE includes at least one of the RedCap UE or the eRedCap UE.

Step S2202, the network device 102 sends a first signal to the UE 101.

In some embodiments, the UE 101 receives the first signal sent by the network device 102.

In some embodiments, the first signal is used by the UE 101 to perform a measurement to obtain a measurement result.

In some embodiments, the first signal is used by the UE 101 to perform a measurement to determine whether multiple PRACH transmissions are required.

In some embodiments, the first signal may be a synchronization signal and physical broadcast channel (PBCH) block (SSB), or may be other signals such as a channel state information reference signal (CSI-RS) and the like.

Step S2203: the UE 101 measures the first signal to obtain a first measurement result.

In some embodiments, the UE 101 may measure a received first signal to obtain a first measurement result.

In some embodiments, the first measurement result may be a reference signal received power (RSRP), or may be other measurement results such as a reference signal received quality (RSRQ) and the like.

In some embodiments, the first measurement result may be used by the UE 101 to determine whether multiple PRACH transmissions are required and the number of PRACH transmissions required.

Step S2204, the UE 101 determines the number of PRACH transmissions.

In some embodiments, the UE 101 determines the number of PRACH transmissions based on the first measurement result and the first information.

In some embodiments, the UE 101 compares the first measurement result with at least one first threshold determined by the first information to determine the number of PRACH transmissions.

In some embodiments, the UE 101 determines the first information based on its type (such as the normal UE or the (e)RedCap UE) and at least one power class supported by the UE.

Optionally, as an example, it is assumed that the UE is a normal UE, and the power classes of the UE include power class 1 (PC#1), power class 2 (PC#2), and power class 3 (PC#3), in which the maximum transmit power corresponding to the power class 3 (PC#3) is the lowest, and the maximum transmit power corresponding to the power class 1 (PC#1) is the highest. The UE determines, based on its type and power classes supported by the UE, first thresholds th1 and th1' corresponding to the PC#1, first thresholds th2 and th2' corresponding to the PC#2, and first thresholds th3 and th3' corresponding to the PC#3. The number of transmissions corresponding to th1 is m1, the number of transmissions corresponding to th1' is m2, the number of transmissions corresponding to th2 is m1, the number of transmissions corresponding to th2' is m2, the number of transmissions corresponding to th3 is m1, and the number of transmissions corresponding to th3' is m2. Assuming that the highest power class currently supported by the UE is the PC#2, the UE may determine the number of PRACH transmissions based on the comparison result of the first measurement result and the first thresholds th2 and th2'.

For example, optionally, the first measurement result is greater than or equal to th2, multiple PRACH transmissions are not performed, and the number of PRACH transmissions is determined to be 1.

Optionally, in a case that the first measurement result is less than th2 and greater than or equal to th2', the number of PRACH transmissions is determined to be m1.

Optionally, in a case that the first measurement result is less than th2', the number of PRACH transmissions is determined to be m2.

Optionally, in some embodiments, the corresponding and appropriate numbers of PRACH transmissions may be configured for different first thresholds.

In some embodiments, the UE 101 determines the first information based on its type and the highest power class among at least one power class supported by the UE.

Optionally, as an example, assume that the UE is the normal UE, and power classes supported by the UE include power class 1 (PC#1), power class 2 (PC#2), and power class 3 (PC#3), in which the maximum transmit power corresponding to the power class 3 (PC#3) is the lowest, and the maximum transmit power corresponding to the power class 1 (PC#1) is the highest. The UE determines first thresholds th1 and th1' corresponding to the PC#1 based on its own type and the highest power class among at least one power class supported by the UE. The number of transmissions corresponding to th1 is m1, and the number of transmissions corresponding to th1' is m2. The UE may determine the number of PRACH transmissions based on a comparison result of the first measurement result and the first thresholds th1 and th1'.

For example, optionally, the first measurement result is greater than or equal to th1, multiple PRACH transmissions are not performed, and the number of PRACH transmissions is determined to be 1.

Optionally, in a case that the first measurement result is less than th1 and greater than or equal to th1', the number of PRACH transmissions is determined to be m1.

Optionally, in a case that the first measurement result is less than th1', the number of PRACH transmissions is determined to be m2.

Optionally, in some embodiments, the corresponding and appropriate numbers of PRACH transmissions may be configured for different first thresholds.

In some embodiments, the names of information, etc. are not limited to the names recited in the embodiments, and terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, the names of information, etc. are not limited to the names recited in the embodiments, and terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, terms such as "physical downlink shared channel (PDSCH)", "DL data" and the like may be interchangeable, and terms such as "physical uplink shared channel (PUSCH)", "UL data" and the like may be interchangeable.

In some embodiments, the terms "radio", "wireless", "radio access network (RAN)", "access network (AN)", "RAN-based" and the like may be used interchangeably.

In some embodiments, terms such as "resource block (RB)", "physical resource block (PRB)", "sub-carrier group (SCG)", "resource element group (REG)", "PRB pair", "RB pair", "resource element (RE)" and "sub-carrier" may be used interchangeably.

In some embodiments, "obtain", "get", "receive", "transmit", "bidirectional transmission", "send and/or receive" may be interchangeable, and may be interpreted as receiving from other entity, obtaining from a protocol, obtaining from high levels, obtaining by self-processing, autonomous implementation, etc.

In some embodiments, terms such as "send", "launch", "report", "issue", "transmit", "bidirectional transmission", "send and/or receive" may be used interchangeably.

In some embodiments, terms such as "certain", "preseted", "preset", "set", "indicated", "some", "any", and "first" may be interchangeable, and "specific A", "preseted A", "preset A", "set A", "indicated A", "some A", "any A", and "first A" may be interpreted as A pre-defined in a protocol, etc., or as A obtained through setting, configuration, or indication, etc., and may also be interpreted as specific A, some A, any A, or first A, etc., but is not limited to this.

In some embodiments, the determination or judgment may be performed by a value represented by 1 bit (0 or 1), by a true or false value (i.e., boolean value) represented by true or false, or by comparison of a numerical value (for example, comparison with a predetermined value), but is not limited to this.

The communication method involved in the embodiments of the present disclosure may include at least one of steps S2201 to S2204. For example, step 2201 may be implemented as an independent embodiment, step 2204 may be implemented as an independent embodiment, steps 2202+2203 may be implemented as an independent embodiment, steps 2201+2204 may be implemented as an independent embodiment, steps 2201+2202+2203 may be implemented as an independent embodiment, steps 2202+2203+2204 may be implemented as an independent embodiment, steps 2201+2202+2203+2204 may be implemented as an independent embodiment, and so on, but not limited thereto.

In some embodiments, step 2202 is optional, and one or more of these steps may be omitted or replaced in different embodiments.

In some embodiments, step 2203 is optional, and one or more of these steps may be omitted or replaced in different embodiments.

In some embodiments, reference may be made to other optional implementations described before or after the specification corresponding to FIG. 2B.

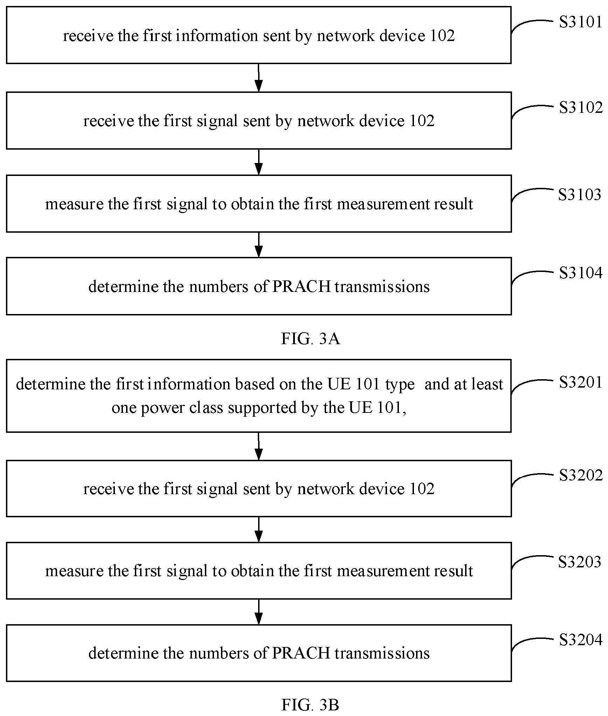

FIG. 3A is a flowchart illustrating a method for processing information according to an embodiment of the present disclosure. As shown in FIG. 3A, the embodiment of the present disclosure relates to a method for processing information, performed by a user equipment (UE) 101, and the method includes the followings.

Step S3101, first information sent by a network device 102 is received.

Regarding the optional implementation of step S3101, reference may be made to the optional implementation of step S2101 in FIG. 2A and other related parts in the embodiments involved in FIG. 2A, which will not be described in detail here.

In some embodiments, the UE 101 receives the first information sent by the network device 102, but the present disclosure is not limited thereto and the UE 101 may also receive the first information sent by other entities.

In some embodiments, the UE 101 obtains the first information specified by a protocol.

In some embodiments, the UE 101 obtains the first information from an upper layer(s).

In some embodiments, the UE 101 performs processing to obtain the first information.

In some embodiments, step S3101 is omitted, and the UE 101 autonomously implements the function indicated by the first information, or the above function is default or acquiescent.

Step S3102, a first signal sent by the network device 102 is received.

Regarding the optional implementation of step S3102, reference may be made to the optional implementation of step S2102 in FIG. 2A and other related parts in the implementation embodiments involved in FIG. 2A, which will not be repeated here.

In some embodiments, the UE 101 receives the first signal sent by the network device 102, but the present disclosure is not limited thereto and the UE 101 may also receive the first signal sent by other entities.

Step S3103: the first signal is measured to obtain a first measurement result.

Regarding the optional implementation of step S3103, reference may be made to the optional implementation of step S2103 in FIG. 2A and other related parts in the implementation embodiments involved in FIG. 2A, which will not be repeated here.

Step S3104, the number of PRACH transmissions is determined.

Regarding the optional implementation of step S3104, reference may be made to the optional implementation of step S2104 in FIG. 2A and other related parts in the implementation embodiments involved in FIG. 2A, which will not be repeated here.

The communication method involved in the embodiments of the present disclosure may include at least one of steps S3101 to S3104. For example, step 3101 may be implemented as an independent embodiment, step 3104 may be implemented as an independent embodiment, steps 3102+3103 may be implemented as an independent embodiment, steps 3101+3104 may be implemented as an independent embodiment, steps 3101+3102+3103 may be implemented as an independent embodiment, steps 3102+3103+3104 may be implemented as an independent embodiment, steps 3101+3102+3103+3104 may be implemented as an independent embodiment, and so on, but the present disclosure is not limited thereto.

In some embodiments, step 3102 is optional, and one or more of these steps may be omitted or replaced in different embodiments.

In some embodiments, step 3103 is optional, and one or more of these steps may be omitted or replaced in different embodiments.

FIG. 3B is a flowchart illustrating a method for processing information according to an embodiment of the present disclosure. As shown in FIG. 3B, the embodiment of the present disclosure relates to a method for processing information, performed by a user equipment (UE) 101, and the method includes the followings.

Step S3201, first information is determined based on a type of the UE 101 and at least one power class supported by the UE 101.

Regarding the optional implementation of step S3201, reference may be made to the optional implementation of step S2201 in FIG. 2B and other related parts in the embodiments involved in FIG. 2B, which will not be described in detail here.

Step S3202, a first signal sent by a network device 102 is received.

Regarding the optional implementation of step S3202, reference may be made to the optional implementation of step S2202 in FIG. 2B and other related parts in the embodiments involved in FIG. 2B, which will not be described in detail here.

Step S3203: the first signal is measured to obtain a first measurement result.

Regarding the optional implementation of step S3203, reference may be made to the optional implementation of step S2203 in FIG. 2B and other related parts in the embodiments involved in FIG. 2B, which will not be described in detail here.

Step S3204, the number of PRACH transmissions is determined.

Regarding the optional implementation of step S3204, reference may be made to the optional implementation of step S2204 in FIG. 2B and other related parts in the embodiments involved in FIG. 2B, which will not be described in detail here.

The communication method involved in the embodiments of the present disclosure may include at least one of steps S3201 to S3204. For example, step 3201 may be implemented as an independent embodiment, step 3204 may be implemented as an independent embodiment, steps 3202+3203 may be implemented as an independent embodiment, steps 3201+3204 may be implemented as an independent embodiment, steps 3201+3202+3203 may be implemented as an independent embodiment, steps 3202+3203+3204 may be implemented as an independent embodiment, steps 3201+3202+3203+3204 may be implemented as an independent embodiment, and so on, but the present disclosure is not limited thereto.

In some embodiments, step 3202 is optional, and one or more of these steps may be omitted or replaced in different embodiments.

In some embodiments, step 3203 is optional, and one or more of these steps may be omitted or replaced in different embodiments.

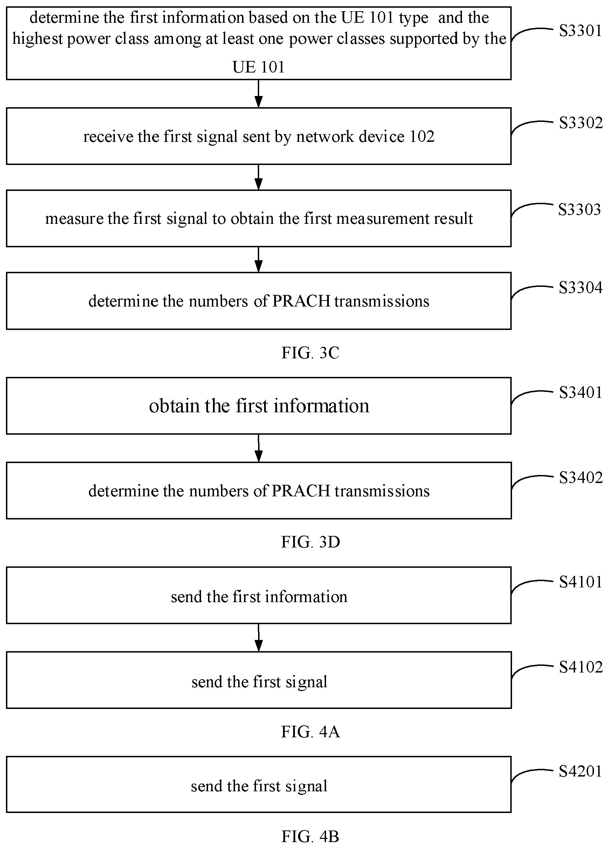

FIG. 3C is a flowchart illustrating a method for processing information according to an embodiment of the present disclosure. As shown in FIG. 3C, the embodiment of the present disclosure relates to a method for processing information, performed by a user equipment (UE) 101, and the method includes the followings.

Step S3301, first information is determined based on a type of the UE 101 and a highest power class among at least one power class supported by the UE 101.

Regarding the optional implementation of step S3301, reference may be made to the optional implementation of step S2201 in FIG. 2B and other related parts in the embodiments involved in FIG. 2B, which will not be described in detail here.

Step S3202, a first signal sent by a network device 102 is received.

Regarding the optional implementation of step S3302, reference may be made to the optional implementation of step S2202 in FIG. 2B and other related parts in the embodiments involved in FIG. 2B, which will not be described in detail here.

Step S3203: the first signal is measured to obtain a first measurement result.

Regarding the optional implementation of step S3303, reference may be made to the optional implementation of step S2203 in FIG. 2B and other related parts in the embodiments involved in FIG. 2B, which will not be described in detail here.

Step S3304, the number of PRACH transmissions is determined.

Regarding the optional implementation of step S3304, reference may be made to the optional implementation of step S2204 in FIG. 2B and other related parts in the embodiments involved in FIG. 2B, which will not be described in detail here.

The communication method involved in the embodiments of the present disclosure may include at least one of steps S3301 to S3304. For example, step 3301 may be implemented as an independent embodiment, step 3304 may be implemented as an independent embodiment, steps 3302+3303 may be implemented as an independent embodiment, steps 3301+3304 may be implemented as an independent embodiment, steps 3301+3302+3303 may be implemented as an independent embodiment, steps 3302+3303+3304 may be implemented as an independent embodiment, steps 3301+3302+3303+3304 may be implemented as an independent embodiment, and so on, but the present disclosure is not limited thereto.

In some embodiments, step 3302 is optional, and one or more of these steps may be omitted or replaced in different embodiments.

In some embodiments, step 3303 is optional, and one or more of these steps may be omitted or replaced in different embodiments.

FIG. 3D is a flowchart illustrating a method for processing information according to an embodiment of the present disclosure. As shown in FIG. 3D, the embodiment of the present disclosure relates to a method for processing information, performed by a user equipment (UE) 101, and the method includes the followings.

Step S3401, first information is obtained.

Regarding the optional implementation of step S3401, reference may be made to the optional implementations of step S2101 in FIG. 2A, step S2201 in FIG. 2B, step S3101 in FIG. 3A, step S3201 in FIG. 3B, and step S3301 in FIG. 3C; and other related parts in the embodiments involved in FIG. 2A, FIG. 2B, FIG. 3A, FIG. 3B and FIG. 3C, which will not be described in detail here.

Step S3402, the number of PRACH transmissions is determined.

Regarding the optional implementation of step S3402, reference may be made to the optional implementations of step S2104 in FIG. 2A, step S2204 in FIG. 2B, step S3103 in FIG. 3A, step S3203 in FIG. 3B, and step S3303 in FIG. 3C; and other related parts in the embodiments involved in FIG. 2A, FIG. 2B, FIG. 3A, FIG. 3B and FIG. 3C, which will not be described in detail here.

Optionally, in some embodiments, the number of PRACH transmissions of the UE 101 is determined based on the first measurement result and the first information, in which the first measurement result is obtained by measuring the first signal sent by the network device 102. Regarding the optional implementation, reference may be made to the optional implementations of steps S2102 and S2103 in FIG. 2A, steps S2202 and S2203 in FIG. 2B, steps S3103 in FIG. 3A, steps S3102 and S3203 in FIG. 3B, and steps S3302 and S3303 in FIG. 3C; and other related parts in the embodiments involved in FIG. 2A, FIG. 2B, FIG. 3A, FIG. 3B, and FIG. 3C, which will not be described in detail herein.

The communication method involved in the embodiments of the present disclosure may include at least one of steps S3401 to S3404. For example, step 3401 may be implemented as an independent embodiment, step 3404 may be implemented as an independent embodiment, steps 3402+3403 may be implemented as an independent embodiment, steps 3401+3404 may be implemented as an independent embodiment, steps 3401+3402+3403 may be implemented as an independent embodiment, steps 3402+3403+3404 may be implemented as an independent embodiment, steps 3401+3402+3403+3404 may be implemented as an independent embodiment, and so on, but the present disclosure is not limited thereto.

In some embodiments, step 3402 is optional, and one or more of these steps may be omitted or replaced in different embodiments.

In some embodiments, step 3403 is optional, and one or more of these steps may be omitted or replaced in different embodiments.

FIG. 4A is a flowchart illustrating a method for processing information according to an embodiment of the present disclosure. As shown in FIG. 4A, the embodiment of the present disclosure relates to a method for processing information, performed by a network device 102, and the method includes the followings.

Step S4101, first information is sent.

Regarding the optional implementation of step S4101, reference may be made to the optional implementation of step S2101 in FIG. 2A and other related parts in the embodiments involved in FIG. 2A, which will not be described in detail here.

In some embodiments, the network device 102 sends the first information to a user equipment (UE) 101, but the present disclosure is not limited thereto and the network device 102 may also send configuration information to other entities.

Step S4102, a first signal is sent.

Regarding the optional implementation of step S4102, reference may be made to the optional implementation of step S2102 in FIG. 2A and other related parts in the embodiments involved in FIG. 2A, which will not be repeated here.

In some embodiments, the network device 102 sends the first signal to the UE 101, but the present disclosure is not limited thereto and the network device 102 may also send the first signal to other entities.

Optionally, the first signal is used by the UE 101 to perform measurement based on the first signal to obtain a first measurement result. Regarding the optional implementation, reference may be made to the optional implementation of step S2103 in FIG. 2A and other related parts in the embodiments involved in FIG. 2A, which will not be repeated here.

Optionally, the first measurement result is used by the UE 101 to determine the number of PRACH transmissions based on the first measurement result and the first information. Regarding the optional implementation, reference may be made to the optional implementation of step S2104 in FIG. 2A and other related parts in the embodiments involved in FIG. 2A, which will not be repeated here.

The communication method involved in the embodiments of the present disclosure may include at least one of steps S4101 to S4102. For example, step 4101 may be implemented as an independent embodiment, step 4102 may be implemented as an independent embodiment, steps 4101+4102 may be implemented as an independent embodiment, and so on, but the present disclosure is not limited thereto.

In some embodiments, step 4101 is optional, and one or more of these steps may be omitted or replaced in different embodiments.

In some embodiments, step 4102 is optional, and one or more of these steps may be omitted or replaced in different embodiments.

FIG. 4B is a flowchart illustrating a method for processing information according to an embodiment of the present disclosure. As shown in FIG. 4B, the embodiment of the present disclosure relates to a method for processing information, performed by a network device 102, and the method includes the followings.

Step S4201, a first signal is sent.

Regarding the optional implementation of step S4201, reference may be made to the optional implementations of step S2102 in FIG. 2A, S2202 in FIG. 2B, and S4102 in FIG. 4A; and other related parts in the embodiments involved in FIG. 2A, FIG. 2B, and FIG. 4A, which will not be described in detail here.

Optionally, the first signal is used by the UE 101 to perform measurement based on the first signal to obtain a first measurement result. Regarding the optional implementation, reference may be made to the optional implementations of step S2103 in FIG. 2A and S2203 in FIG. 2B, and other related parts in the embodiments involved in FIG. 2A and FIG. 2B, which will not be repeated here.

Optionally, the first measurement result is used by the UE 101 to determine the number of PRACH transmissions based on the first measurement result and the first information. Regarding the optional implementation, reference may be made to the optional implementations of step S2104 in FIG. 2A and S2204 in FIG. 2B, and other related parts in the embodiments involved in FIG. 2A and FIG. 2B, which will not be repeated here.

Optionally, the first information is determined by the UE 101. Regarding the optional implementation, reference may be made to the optional implementations of step S2101 in FIG. 2A and S2201 in FIG. 2B, and other related parts in the embodiments involved in FIG. 2A and FIG. 2B, which will not be repeated here.

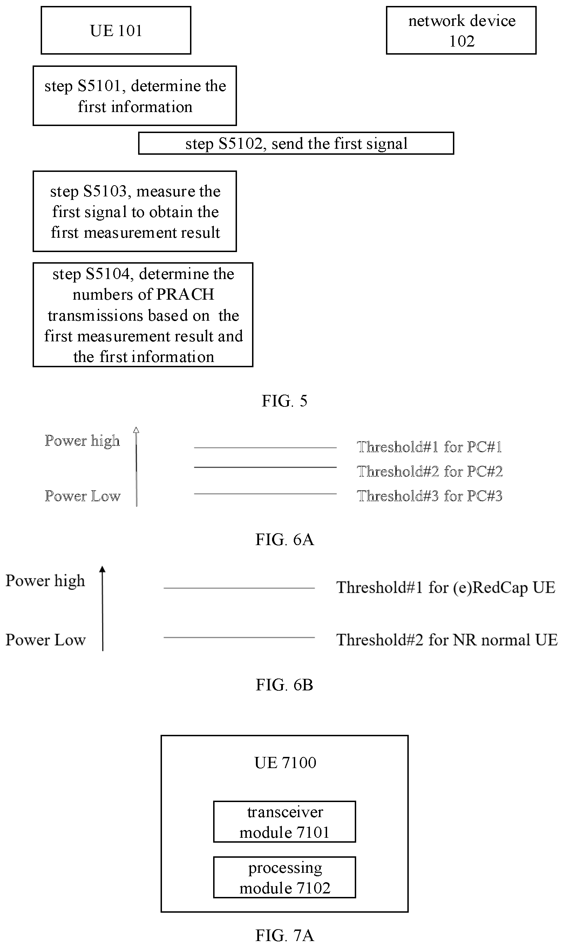

FIG. 5 is a flowchart illustrating a method for processing information according to in an embodiment of the present disclosure. As shown in FIG. 5, the method involved in the embodiment of the present disclosure is applied to a communication system 100, and the method includes the followings.

Step S5101: a user equipment (UE) determines first information, in which the first information is used to determine at least one first threshold, and respective first thresholds correspond to numbers of PRACH transmissions.

Step S5102: the network device sends a first signal to the UE.

Step S5103: the UE measures the first signal to obtain a first measurement result.

Step S5104: the UE determines the number of PRACH transmissions based on the first measurement result and the first information.

Regarding the optional implementations of step S5101, step S5102, step S5103, and step S5104, reference may be made to the steps in any embodiment or any multiple embodiments in the above-mentioned FIG. 2A-2B, FIG. 3A-3D, and FIG. 4A-4B, and other related parts in the embodiments involved in FIG. 2A-2B, FIG. 3A-3D, and FIG. 4A-4B.

In some embodiments, the above methods may include the method described in the above embodiments of the communication system, the UE, the network device, etc., which will not be repeated here.

The communication method involved in the embodiments of the present disclosure may include at least one of steps S5101 to S5104. For example, step 5101 may be implemented as an independent embodiment, step 5104 may be implemented as an independent embodiment, steps 5102+5103 may be implemented as an independent embodiment, steps 5101+5104 may be implemented as an independent embodiment, steps 5101+5102+5103 may be implemented as an independent embodiment, steps 5102+5103+5104 may be implemented as an independent embodiment, steps 5101+5102+5103+5104 may be implemented as an independent embodiment, and so on, but the present disclosure is not limited thereto.

In some embodiments, step 5102 is optional, and one or more of these steps may be omitted or replaced in different embodiments.

In some embodiments, step 5103 is optional, and one or more of these steps may be omitted or replaced in different embodiments.

In the implementation methods and embodiments, unless there is any contradiction, each step may be independent, arbitrarily combined or exchanged in order, the optional methods or optional examples may be arbitrarily combined, and may be arbitrarily combined with any steps of other implementation methods or other embodiments.

The following is an exemplary introduction to the methods described in the above embodiments.

Embodiment 1: For a specific number of configuration (PRACH) transmissions, a corresponding first threshold of RSRP is determined by at least one of the following methods.

Mode 1: the determination of the first threshold of the RSRP is differentiated by UE power classes (PCs), and different UE power classes have different first thresholds of the RSRP.

Optionally, the base station may directly configure multiple different first thresholds of the RSRP. Alternatively, a first RSRP threshold is configured for a certain PC, and the remaining PCs have a certain offset relative to the first RSRP threshold; further, the offset may be determined by a protocol provision and/or by configuration of the base station, and different PCs may have different offsets relative to the PC configured with the first RSRP threshold, or may have different offsets relative to the previous PC. For example, a gNB configures the RSRP threshold#1 for PC#1, the RSRP threshold#2 of PC#2 has an offset#1 dB power offset of relative to the RSRP threshold#1, and PC#3 has an offset#2 offset relative to the RSRP threshold of PC#1 or PC#2. The offset may be positive or negative. An example diagram is shown in FIG. 6A.

Mode 2: the determination of the first threshold of the RSRP is not differentiated by UE power classes. Different UE power classes have the same first threshold of the RSRP. The first threshold of the RSRP is configured based on the highest PC supported by the current serving cell; or, the first threshold of the RSRP is configured based on the highest PC supported by the current cell.

Mode 3: the configuration of the first threshold of the RSRP is differentiated by UE types. For example, different UE types, such as (e)RedCap UE and an normal UE, have different first thresholds of the RSRP.

Optionally, the base station may directly configure different first thresholds of the RSRP for different UE types. Alternatively, the corresponding first of the RSRP is configured only for a certain UE type, and the first of the RSRP of other UE types have a certain offset relative to the first threshold of the RSRP configured by the base station; further, the offset may be determined by a protocol provision and/or by configuration of the base station. For example, the base station configures the corresponding first threshold threshold#1 of a first RSRP for the normal UE, and for the (e)RedCap UE, determines first threshold threshold#2 as: the first first threshold + offset, of a second RSRP. The offset may be a positive value or a negative value. Optionally, the (e)RedCap UE is an (e)RedCap UE that only includes one receiving channel (1RX branch). An example diagram is shown in FIG. 6B.

Embodiment 2: The UE determines, based on the UE type and the power class the UE supported, or the highest PC the UE supported, the first threshold of the RSRP corresponding to the number of transmissions of each configuration. Different numbers of transmissions have different first thresholds of the RSRP.

Further, in some embodiments, before initiating RACH, the UE determines whether to perform multiple PRACH transmissions and/or determines the numbers of multiple PRACH transmissions by comparing a first threshold of synchronization signal reference signal received power (SS-RSRP) with a first threshold of the RSRP.

The embodiments of the present disclosure also propose an apparatus for performing any of the above methods. For example, an apparatus is proposed, and the apparatus includes a unit or module for implementing each step performed by the UE in any of the above methods. For another example, another apparatus is also proposed, including a unit or module for implementing each step performed by a network device (such as an access network device, a core network function node, or a core network device, etc.) in any of the above methods.

It should be understood that the division of the units or modules in the above apparatus is only a division of logical functions, and in actual implementation, they may be fully or partially integrated into one physical entity, or they may be physically separated. In addition, the units or modules in the apparatus may be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus, in which the processor is, for example, a general-purpose processor, such as a central processing unit (CPU) or a microprocessor, and the memory is a memory inside the apparatus or a memory outside the apparatus. Alternatively, the units or modules in the apparatus may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which may include a large number of logic gate circuits, and the connection relationship between the logic gate circuits is configured by a configuration file, so as to realize the functions of some or all of the above units or modules. All units or modules of the above apparatuses may be realized in the form of a processor calling software, or in the form of a hardware circuit, or in part by a processor calling software, and the rest by a hardware circuit.

In the embodiments of the present disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP), etc.; in another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), ora deep learning processing unit (DPU), etc.

FIG. 7A is a block diagram illustrating a user equipment (UE) provided in an embodiment of the present disclosure. As shown in FIG. 7A, the UE 7100 may include: at least one of a transceiver module 7101, a processing module 7102, etc. In some embodiments, the processing module is configured to obtain first information, and the first information is used to determine a corresponding relationship between first thresholds and numbers of physical random access channel (PRACH) transmissions, in which the number of the first thresholds is one or more, and each of the first thresholds corresponds to one of the numbers of PRACH transmissions. The processing module is also configured to determine the number of PRACH transmissions of the UE based on a first measurement result and the first information, in which the first measurement result is obtained by measuring a first signal sent by a network device.

Optionally, the transceiver module is configured to execute at least one of the communication steps such as sending and/or receiving performed by the UE 101 in any of the above methods (for example, step S2101, step S2102, step S2202, but not limited to this), which will not be repeated here. Optionally, the processing module is configured to execute at least one of the other steps (for example, step S2103, step S2104, step S2201, step S2203, step S2204, but not limited to this) performed by the UE 101 in any of the above methods, which will not be repeated here.

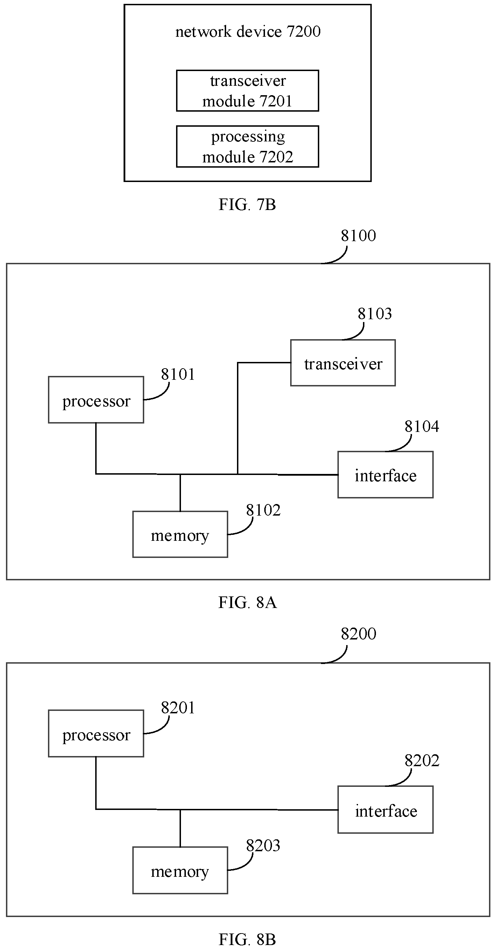

FIG. 7B is a block diagram illustrating a network device provided in an embodiment of the present disclosure. As shown in FIG. 7B, the network device 7200 may include: at least one of a transceiver module 7201, a processing module, etc. In some embodiments, the transceiver module is configured to send first information to a user equipment (UE), in which the first information is used to determine a corresponding relationship between first thresholds and numbers of physical random access channel (PRACH) transmissions, in which the number of the first thresholds is one or more, and each of the first thresholds corresponds to one of the numbers of PRACH transmissions; in which a first measurement result and the first information are used for the UE to determine the number of PRACH transmissions of the UE, in which the first measurement result is obtained by the UE measuring a first signal sent by the network device.

Optionally, the above mentioned transceiver module is configured to execute at least one of the communication steps such as sending and/or receiving performed by the network device 102 in any of the above methods (for example, step S2101, step S2102, step S2202, but not limited to these), which will not be repeated here.

In some embodiments, the transceiver module may include a sending module and/or a receiving module, and the sending module and the receiving module may be separate or integrated. Optionally, the transceiver module may be interchangeable with the transceiver.

In some embodiments, the processing module may be a module or include multiple submodules. Optionally, the multiple submodules respectively execute all or part of the steps required to be executed by the processing module. Optionally, the processing module may be replaced with the processor.

FIG. 8A is a block diagram illustrating a communication device 8100 provided in an embodiment of the present disclosure. The communication device 8100 may be a network device (e.g., an access network device, a core network device, etc.), or a terminal (e.g., a user device, etc.), or a chip, a chip system, or a processor that supports the network device to implement any of the above methods, or a chip, a chip system, or a processor that supports the terminal to implement any of the above methods. The communication device 8100 may be used to implement the method described in the above method embodiment, and the details may refer to the description in the above method embodiments.

As shown in FIG. 8A, the communication device 8100 includes one or more processors 8101. The processor 8101 may be a general purpose processor or a dedicated processor. For example, a baseband processor or a central processing unit. The baseband processor may be used to process the communication protocol and the communication data, and the central processing unit may be used to control the communication device (such as a base station, a baseband chip, a terminal device, a terminal device chip, a DU or a CU, etc.), execute a program, and process the data of the program. The communication device 8100 is used to execute any of the above methods.

In some embodiments, the communication device 8100 further includes one or more memories 8102 for storing instructions. Optionally, all or part of the memory 8102 may also be outside the communication device 8100.

In some embodiments, the communication device 8100 further includes one or more transceivers 8103. When the communication device 8100 includes one or more transceivers 8103, the transceiver 8103 performs at least one of the communication steps such as sending and/or receiving in the above methods (for example, step S2101, step S2102, but not limited thereto), and the processor 8101 performs at least one of the other steps (for example, step S2103, but not limited thereto).

In some embodiments, the transceiver may include a receiver and/or a transmitter, and the receiver and the transmitter may be separate or integrated. Optionally, the terms such as transceiver, transceiver unit, transceiver, transceiver circuit, etc. may be replaced with each other, the terms such as transmitter, transmission unit, transmitter, transmission circuit, etc. may be replaced with each other, and the terms such as receiver, receiving unit, receiver, receiving circuit, etc. may be replaced with each other.

In some embodiments, the communication device 8100 may include one or more interface circuits 8104. Optionally, the interface circuit 8104 is connected to the memory 8102, and the interface circuit 8104 may be used to receive signals from the memory 8102 or other devices, and may be used to send signals to the memory 8102 or other devices. For example, the interface circuit 8104 may read instructions stored in the memory 8102 and send the instructions to the processor 8101.

The communication device 8100 described in the above embodiments may be a network device or a terminal, but the scope of the communication device 8100 described in the present disclosure is not limited thereto, and a structure of the communication device 8100 may not be subject to FIG. 8A. The communication device may be a stand-alone device or may be a part of a larger device. For example, the communication device may be: (1) a stand-alone integrated circuit (IC), or a chip, or a system on chip or a subsystem; (2) a set of one or more ICs, which, optionally, may also include a storage component configured to store data and a computer program; (3) an ASIC, such as a Modem; (4) a module that may be embedded within other devices; (5) a receiver, a terminal, a smart terminal, a cellular phone, a wireless device, a handset, a mobile unit, an in-vehicle device, a network device, a cloud device, an artificial intelligence device, etc.; and (6) others, and so forth.

FIG. 8B is a block diagram of a chip 8200 provided in an embodiment of the present disclosure. In the case that the communication device 8100 may be a chip or a chip system, reference may be made to the schematic diagram of the structure of the chip 8200 shown in FIG. 8B, but the present disclosure is not limited thereto.

The chip 8200 includes one or more processors 8201, and the chip 8200 is used to execute any of the above methods.

In some embodiments, the chip 8200 further includes one or more interface circuits 8202. Optionally, the interface circuit 8202 is connected to the memory 8203. The interface circuit 8202 may be used to receive signals from the memory 8203 or other devices, and the interface circuit 8202 may be used to send signals to the memory 8203 or other devices. For example, the interface circuit 8202 may read instructions stored in the memory 8203 and send the instructions to the processor 8201.

In some embodiments, the interface circuit 8202 executes at least one of the communication steps such as sending and/or receiving in the above methods (for example, step S2101, step S2102, but not limited to this), and the processor 8201 executes at least one of the other steps (for example, step S2103, but not limited to this).

In some embodiments, terms such as interface circuit, interface, transceiver pin, and transceiver may be used interchangeably.

In some embodiments, the chip 8200 further includes one or more memories 8203 for storing instructions. Optionally, all or part of the memory 8203 may be outside the chip 8200.

The present disclosure also proposes a storage medium. The storage medium stores instructions, and when the instructions are executed on the communication device 8100, the communication device 8100 executes any of the above methods. Optionally, the storage medium is an electronic storage medium. Optionally, the storage medium is a computer-readable storage medium, but is not limited to this, and it may also be a storage medium readable by other devices. Optionally, the storage medium may be a non-transitory storage medium, but is not limited to this, and it may also be a temporary storage medium.

The present disclosure also proposes a program product, which, when executed by the communication device 8100, enables the communication device 8100 to execute any of the above methods. Optionally, the program product is a computer program product.

The present disclosure also proposes a computer program, which, when executed on a computer, causes the computer to execute any one of the above methods.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another in a wire (e.g., a coaxial cable, an optical fiber, a digital subscriber line (DSL)) or wireless (e.g., infrared, wireless, microwave) manner. The computer-readable storage medium may be any available medium that may be accessed by a computer or a data storage device, such as a server and a data center, that integrates one or more available media. The available media may be magnetic media (e.g., floppy disks, hard disks, magnetic tapes), optical media (e.g., high-density digital video discs (DVDs)), or semiconductor media (e.g., solid state disks, SSD)) etc.

Those skilled in the related art may realize that, the units and algorithm steps of each example described in conjunction with the embodiments disclosed herein may be implemented in an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, specific working processes of systems, apparatuses and units described above may refer to corresponding processes in the above method embodiments, which will not be repeated here.

The above are only implementations of the disclosure, but the protection scope of the disclosure is not limited thereto. Any changes or substitutions that may be easily considered by those skilled in the art within the scope of the present disclosure should be covered by the scope of protection of the disclosure. Therefore, the protection scope of the present disclosure should be subject to the protection scope of claims.

## Claims

1. A method for processing information, performed by a user equipment (UE), comprising:
obtaining first information, wherein the first information is used to determine a corresponding relationship between first thresholds and numbers of physical random access channel (PRACH) transmissions, wherein the number of the first thresholds is one or more, and each of the first thresholds corresponds to one of the numbers of PRACH transmissions;
determining the number of PRACH transmissions of the UE based on a first measurement result and the first information, wherein the first measurement result is obtained by measuring a first signal sent by a network device.

2. The method according to claim 1, further comprising one or more of:
an UE power class corresponding to one or more of the first thresholds;
an UE type corresponding to one or more of the first thresholds;
a highest power class among power classes supported by a serving cell of the UE corresponding to one or more of the first thresholds;
an UE type and a power class supported by the UE corresponding to one or more of the first thresholds; or
an UE type and a highest power class supported by the UE corresponding to one or more of the first thresholds.

3. The method according to claim 2, wherein determining the number of PRACH transmissions of the UE based on the first measurement result and the first information comprises:
determining the number of PRACH transmissions corresponding to a minimum value in second thresholds as the number of PRACH transmissions of the UE, wherein the second thresholds comprise one or more of the first thresholds that are greater than the first measurement result.

4. The method according to claim 2, wherein determining the number of PRACH transmissions of the UE based on the first measurement result and at least one first threshold comprises:
in a case that the first measurement result is greater than or equal to a maximum value among the at least one first threshold, determining that the number of PRACH transmissions of the UE is one.

5. The method according to any one of claims 2-4, wherein obtaining the first information comprises:
receiving the first information sent by the network device.

6. The method according to any one of claims 1-5, wherein
the first information comprises at least one first threshold; or,
the first information comprises a third threshold and at least one offset, wherein the third threshold and the at least one offset are used to determine at least one first threshold.

7. The method according to claim 6, wherein
each first threshold corresponds to an offset operation count, and the first threshold is equal to a sum of the third threshold and one or more offsets corresponding to one or more offset operations.

8. The method according to claims 6 or 7, wherein the third threshold is one or more of:
a first threshold corresponding to a lowest power class among power classes supported by the UE;
a first threshold corresponding to a highest power class among power classes supported by the UE;
a first threshold corresponding to a first type; or
a first threshold corresponding to a second type;
wherein a UE type is the first type or the second type.

9. The method according to claim 8, wherein the first threshold corresponding to the first type comprises:
a first threshold corresponding to each number of PRACH transmissions among multiple numbers of PRACH transmissions of the UE of the first type; or,
a first threshold corresponding to one number of PRACH transmissions of the UE of the first type.

10. The method according to claim 8, wherein the first threshold corresponding to the second type comprises:
a first threshold corresponding to each number of PRACH transmissions among multiple numbers of PRACH transmissions of the UE of the second type; or,
a first threshold corresponding to one number of PRACH transmissions of the UE of the second type.

11. The method according to any one of claims 1-10, wherein the first measurement result is reference signal receiving power (RSRP).

12. The method according to any one of claims 1-11, wherein the first signal is a synchronization signal and physical broadcast channel (PBCH) block (SSB).

13. A method for processing information, performed by a network device, comprising:
sending first information to a user equipment (UE), wherein the first information is used to determine a corresponding relationship between first thresholds and numbers of physical random access channel (PRACH) transmissions, wherein the number of the first thresholds is one or more, and each of the first thresholds corresponds to one of the numbers of PRACH transmissions;
wherein a first measurement result and the first information are used for the UE to determine the number of PRACH transmissions of the UE, wherein the first measurement result is obtained by the UE measuring a first signal sent by the network device.

14. The method according to claim 13, further comprising one or more of:
an UE power class corresponding to one or more of the first thresholds;
an UE type corresponding to one or more of the first thresholds;
a highest power class among power classes supported by a serving cell of the UE corresponding to one or more of the first thresholds;
an UE type and a power class supported by the UE corresponding to one or more of the first thresholds; or
an UE type and a highest power class supported by the UE corresponding to one or more of the first thresholds.

15. The method according to claim 14, wherein
the number of PRACH transmissions of the UE is the number of PRACH transmissions corresponding to a minimum value in second thresholds, wherein the second thresholds comprise one or more of the first thresholds that are greater than the first measurement result.

16. The method according to claim 14, wherein
in a case that the first measurement result is greater than or equal to a maximum value among at least one first threshold, the number of PRACH transmissions of the UE is one.

17. The method according to any one of claims 13-16, wherein
the first information comprises at least one first threshold; or,
the first information comprises a third threshold and at least one offset, wherein the third threshold and the at least one offset are used to determine at least one first threshold.

18. The method according to claim 17, wherein
each first threshold corresponds to an offset operation count, and the first threshold is equal to a sum of the third threshold and one or more offsets corresponding to one or more offset operations.

19. The method according to claims 17 or 18, wherein the third threshold is one or more of:
a first threshold corresponding to a lowest power class among power classes supported by the UE;
a first threshold corresponding to a highest power class among power classes supported by the UE;
a first threshold corresponding to a first type; or
a first threshold corresponding to a second type;
wherein a UE type of the UE is the first type or the second type.

20. The method according to claim 19, wherein the first threshold corresponding to the first type comprises:
a first threshold corresponding to each number of PRACH transmissions among multiple numbers of PRACH transmissions of the UE of the first type; or,
a first threshold corresponding to one number of PRACH transmissions of the UE of the first type.

21. The method according to claim 19, wherein the first threshold corresponding to the second type comprises:
a first threshold corresponding to each number of PRACH transmissions among multiple numbers of PRACH transmissions of the UE of the second type; or,
a first threshold corresponding to one number of PRACH transmissions of the UE of the second type.

22. The method according to any one of claims 13-21, wherein the first measurement result is reference signal receiving power (RSRP).

23. The method according to any one of claims 13-22, wherein the first signal is a synchronization signal and physical broadcast channel (PBCH) block (SSB).

24. A method for processing information, comprising:
obtaining, by a user equipment (UE), first information, wherein the first information is used to determine first thresholds and numbers of physical random access channel (PRACH) transmissions, wherein the number of the first thresholds is one or more, and each of the first thresholds corresponds to one of the numbers of PRACH transmissions;
determining, by the UE, the number of PRACH transmissions of the UE based on a first measurement result and the first information, wherein the first measurement result is obtained by measuring a first signal sent by a network device.

25. The method according to claim 24, further comprising one or more of:
an UE power class corresponding to one or more of the first thresholds;
an UE type corresponding to one or more of the first thresholds;
a highest power class among power classes supported by a serving cell of the UE corresponding to one or more of the first thresholds;
an UE type and a power class supported by the UE corresponding to one or more of the first thresholds; or
an UE type and a highest power class supported by the UE corresponding to one or more of the first thresholds.

26. The method according to claim 25, wherein determining by the UE the number of the PRACH transmissions of the UE based on the first measurement result and the first information comprises:
determining, by the UE, the number of PRACH transmissions corresponding to a minimum value in second thresholds as the number of PRACH transmissions of the UE, wherein the second thresholds comprise one or more of the first thresholds that are greater than the first measurement result.

27. The method according to claim 25, wherein determining by the UE the number of the PRACH transmissions of the UE based on the first measurement result and the first information comprises:
in a case that the first measurement result is greater than or equal to a maximum value among at least one first threshold, determining, by the UE, that the number of PRACH transmissions of the UE is one.

28. The method according to any one of claims 25-27, wherein obtaining by the UE the first information comprises:
receiving, by the UE, the first information sent by the network device.

29. The method according to any one of claims 24-28, wherein
the first information comprises at least one first threshold; or,
the first information comprises a third threshold and at least one offset, wherein the third threshold and the at least one offset are used to determine at least one first threshold.

30. The method according to claim 29, wherein
each first threshold corresponds to an offset operation count, and the first threshold is equal to a sum of the third threshold and one or more offsets corresponding to one or more offset operations.

31. The method according to claims 29 or 30, wherein the third threshold is one or more of:
a first threshold corresponding to a lowest power class among power classes supported by the UE;
a first threshold corresponding to a highest power class among power classes supported by the UE;
a first threshold corresponding to a first type; or
a first threshold corresponding to a second type;
wherein a UE type of the UE is the first type or the second type.

32. The method according to claim 31, wherein the first threshold corresponding to the first type comprises:
a first threshold corresponding to each number of PRACH transmissions among multiple numbers of PRACH transmissions of the UE of the first type; or,
a first threshold corresponding to one number of PRACH transmissions of the UE of the first type.

33. The method according to claim 31, wherein the first threshold corresponding to the second type comprises:
a first threshold corresponding to each number of PRACH transmissions among multiple numbers of PRACH transmissions of the UE of the second type; or,
a first threshold corresponding to one number of PRACH transmissions of the UE of the second type.

34. The method according to any one of claims 24-33, wherein the first measurement result is reference signal receiving power (RSRP).

35. The method according to any one of claims 24-34, wherein the first signal is a synchronization signal and physical broadcast channel (PBCH) block (SSB).

36. A user equipment (UE), comprising:
a processing module, configured to obtain first information, wherein the first information is used to determine a corresponding relationship between first thresholds and numbers of physical random access channel (PRACH) transmissions, wherein the number of the first thresholds is one or more, and each of the first thresholds corresponds to one of the numbers of PRACH transmissions;
wherein the processing module is further configured to determine the number of PRACH transmissions of the UE based on a first measurement result and the first information, wherein the first measurement result is obtained by measuring a first signal sent by a network device.

37. A network device, comprising:
a transceiver module, configured to send first information to a user equipment (UE), wherein the first information is used to determine at least one threshold, and each of the at least one threshold corresponds to one number of physical random access channel (PRACH) transmissions;
wherein a first measurement result and the first information are used for the UE to determine the number of PRACH transmissions of the UE, wherein the first measurement result is obtained by the UE measuring a first signal sent by a network device.

38. A user equipment (UE), comprising:
one or more processors;
wherein the UE is configured to perform the method for processing information according to any one of claims 1-12.

39. A network device, comprising:
one or more processors;
wherein the network device is configured to perform the method for processing information according to any one of claims 13-23.

40. A communication system, comprising a user equipment (UE) and a network device, wherein the UE is configured to perform a method according to any one of claims 1 to 12; and the network device is configured to perform a method according to any one of claims 13 to 23.

41. A storage medium, wherein instructions are stored on the storage medium, and when the instructions are executed in a communication apparatus, a method according to any one of claims 1 to 12 or 13-23 is performed by the communication apparatus.
